(19) Europäisches Patentamt
European Patent Office
Office européen des brevets

(11) EP 4 037 051 B1

(12) EUROPÄISCHE PATENTSCHRIFT

(45) Veröffentlichungstag und Bekanntmachung des Hinweises auf die Patenterteilung:
**25.03.2026 Patentblatt 2026/13**

(21) Anmeldenummer: **21154307.9**

(22) Anmeldetag: **29.01.2021**

(51) Internationale Patentklassifikation (IPC):
***H01M 10/0563*** (2010.01) ***H01M 4/66*** (2006.01)
***H01M 4/80*** (2006.01) ***H01M 4/62*** (2006.01)
***H01M 4/131*** (2010.01) ***H01M 4/133*** (2010.01)
***H01M 4/485*** (2010.01) ***H01M 4/505*** (2010.01)
***H01M 4/525*** (2010.01) ***H01M 4/58*** (2010.01)
***H01M 4/587*** (2010.01) ***H01M 10/0525*** (2010.01)
***H01M 10/054*** (2010.01) ***H01M 10/0567*** (2010.01)
***H01M 10/0568*** (2010.01) ***H01M 10/0585*** (2010.01)

(52) Gemeinsame Patentklassifikation (CPC):
**H01M 10/0563; H01M 4/131; H01M 4/133; H01M 4/485; H01M 4/505; H01M 4/525; H01M 4/582; H01M 4/5825; H01M 4/622; H01M 4/623; H01M 4/661; H01M 4/667; H01M 4/808; H01M 10/0525; H01M 10/054;**
(Forts.)

(54) **WIEDERAUFLADBARE BATTERIEZELLE**
RECHARGEABLE BATTERY CELL
ÉLÉMENT DE BATTERIE RECHARGEABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.08.2022 Patentblatt 2022/31**

(73) Patentinhaber: **Innolith Technology AG**
**4052 Basel (CH)**

(72) Erfinder:
- **ZINCK, Laurent**
**67470 Mothern (FR)**
- **HENRICHS, Leonard**
**76646 Bruchsal (DE)**

(74) Vertreter: **LBP Lemcke, Brommer & Partner Patentanwälte mbB**
**Siegfried-Kühn-Straße 4**
**76135 Karlsruhe (DE)**

(56) Entgegenhaltungen:
**EP-A1- 3 734 724**
**EP-A1- 3 772 129**
**WO-A1-2020/013667**
**WO-A1-2021/006704**
**US-A- 4 510 220**
**US-A1- 2015 093 632**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**(Forts. nächste Seite)**

(52) Gemeinsame Patentklassifikation (CPC): (Forts.)
**H01M 10/0567; H01M 10/0568; H01M 10/0585;**
H01M 2300/002; Y02E 60/10

## Beschreibung

Die Erfindung betrifft eine wiederaufladbare Batteriezelle mit einem auf $SO_2$-basierenden Elektrolyt.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Wiederaufladbare Batteriezellen, welche Lithium als aktives Metall enthalten, werden auch als Lithium-Ionen-Zellen bezeichnet. Die Energiedichte dieser Lithium-Ionen-Zellen kann entweder durch Steigerung der spezifischen Kapazität der Elektroden oder durch Steigerung der Zellspannung erhöht werden. Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur aufweisen, in die Ionen des aktiven Metalls beim Betrieb der Lithium-Ionen-Zelle ein- und ausgelagert werden können. Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Im Falle einer Insertionselektrode bedeutet das, dass sich die Elektrodenprozesse nicht nur an der Oberfläche der Elektroden, sondern auch innerhalb der Kristallstruktur abspielen können. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab. Diese elektrochemischen Prozesse führen direkt oder indirekt zur Abgabe von Elektronen in den externen Stromkreis oder zur Aufnahme von Elektronen aus dem externen Stromkreis. Damit die Elektronen in den externen Stromkreis abgegeben oder aus dem externen Stromkreis aufgenommen werden können, weisen die positive und negative Elektrode der Lithium-Ionen-Zelle jeweils ein Ableitelement auf. Diese Ableitelemente sind wichtige Bestandteile der positiven und negativen Elektrode. Die in den Elektrodenreaktionen der ersten Elektrode freigesetzten Elektronen ($e^-$) werden über ihr Ableitelement in den externen Stromkreis abgegeben. Die bei den Elektrodenreaktionen der zweiten Elektrode benötigten Elektronen werden vom Ableitelement dieser Elektrode aus dem externen Stromkreis geliefert. Eine gute elektronische Leitfähigkeit beider Ableitelemente ist Voraussetzung für eine hohe Strombelastbarkeit der Batteriezelle. Die Ableitelemente können beispielsweise planar in Form eines Metallblechs oder dreidimensional in Form eines porösen Metallschaums ausgebildet sein. Die aktiven Materialien der negativen oder positiven Elektrode werden in den Metallschaum eingebracht oder auf das planare Metallblech der Ableitelemente aufgebracht. Das aktive Material in dem Metallschaum und die Beschichtung des planaren Metallblechs mit dem aktiven Material sind porös, so dass der verwendete Elektrolyt in die jeweilige poröse Struktur eindringen kann und dadurch mit dem jeweiligen Ableitelement in Kontakt steht. Beim Laden und Entladen einer Batteriezelle wird eine Potentialdifferenz zwischen den Elektroden aufgebaut. Reaktionen des Ableitelements mit den aktiven Elektrodenmaterialien oder dem Elektrolyten können durch diese Potentialdifferenz begünstigt werden. Das Material des Ableitelements muss also im entsprechenden Potentialbereich sowohl inert gegenüber den verwendeten aktiven Elektrodenmaterialien als auch gegenüber dem verwendeten Elektrolyten sein, ohne dass unerwünschte Nebenreaktionen stattfinden. Daher muss bei der Wahl eines geeigneten Ableitelements der verwendete Elektrolyt und der zu erwartende Potentialbereich berücksichtigt werden. Im nachfolgenden Text stellen die Begriffe "Ableitelement", "Ableiter" und "Stromableiter" Synonyme dar.

Auch der Elektrolyt ist ein wichtiges Funktionselement jeder wiederaufladbaren Batteriezelle. Er enthält meistens ein Lösungsmittel oder ein Lösungsmittelgemisch und mindestens ein Leitsalz. Feststoffelektrolyte oder ionische Flüssigkeiten enthalten zum Beispiel kein Lösungsmittel, sondern nur das Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Ionen-Zellen enthalten einen Elektrolyten, der aus einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$). Das Lösungsmittelgemisch

kann beispielsweise Ethylencarbonat enthalten. Der Elektrolyt LP57, der die Zusammensetzung 1 M $LiPF_6$ in EC:EMC 3:7 aufweist, ist ein Beispiel für einen solchen Elektrolyten. Aufgrund des organischen Lösungsmittels oder Lösungsmittelgemischs werden derartige Lithium-Ionen-Zellen auch als organische Lithium-Ionen-Zellen bezeichnet.

Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306858 B2 (im Nachfolgenden bezeichnet als [V1]) Leitsalze in Form von Tetraalkoxy- oder Tetraaryloxyboratsalzen, die fluoriert oder teilfluoriert sein können. Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organische Lithium-Ionen-Zellen eingesetzt.

Es ist seit langem bekannt, dass das ungewollte Überladen von organischen Lithium-Ionen-Zellen zu einer irreversiblen Zersetzung von Elektrolytkomponenten führt. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Lithium-Ionen-Zelle verantwortlich. Die überwiegende Mehrheit an Ladeprotokollen für diese organischen Lithium-Ionen-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Ionen-Zellen mit nicht übereinstimmenden Kapazitäten in Reihe geschaltet werden.

Deshalb sind organische Lithium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die bei ungewollter Temperaturerhöhung schmelzen und hierbei die organische Lithium-Ionen-Zelle mit geschmolzenem Kunststoff fluten können. Dadurch wird eine weitere unkontrollierte Temperaturerhöhung vermieden. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist im Sinne der vorliegenden Erfindung ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Bei dem Leitsalz handelt es sich z.B. oft um Lithiumtetrachloroaluminat ($LiAlCl_4$), welches mit dem gasförmigen $SO_2$ einen flüssigen Solvatkomplex bildet, wobei das $SO_2$ gebunden und der Dampfdruck gegenüber dem reinen $SO_2$ merklich gesenkt wird. Es entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden. Beispiele für auf $SO_2$-basierenden Elektrolyte offenbaren die WO 2020/013667 A1 und die WO 2021/006704 A1 Die WO 2020/013667 A1 beschreibt eine wiederaufladbare Lithiumbatterie mit einer positiven Elektrode, einer negativen Elektrode, einem dazwischenliegenden Separator und einem auf $SO_2$-basierenden Elektrolyt in Kombination mit einer negativen Elektrode, bei der das Kohlenstoffmaterial mit Titanoxid beschichtet ist. In den Experimenten wird ein $LiAlCl_4$* 3 $SO_2$-Elektrolyt verwendet,

Die WO 2021/006704 A1 offenbart einen auf $SO_2$-basierenden Elektrolyten der zwei verschiedene Leitsalze der allgemeinen Formel MNX-n($SO_2$) besitzt. (mit M=Alkalimetall; N= mindestens ein Metall ausgewählt aus der der Alkalimetalle, Übergangs-, oder Post-Übergangsmetallen; X=Halogen). Es wird ein auf $SO_2$-basierender Elektrolyt mit der Zusammensetzung $LiAlCl_4$*3$SO_2$ und $NaAlCl_4$*2$SO_2$ beschrieben.

Beispielsweise geht aus der EP 2 534 725 B1 (im Nachfolgenden bezeichnet als [V3]) eine wiederaufladbare Batteriezelle mit einem auf $SO_2$-basierenden Elektrolyten hervor, der als Leitsalz vorzugsweise ein Tetrahalogenoaluminat, insbesondere $LiAlCl_4$, enthält.

In Bezug auf Ableitelemente wird in der [V3] berichtet, dass "für die Stromableiter von und zu den Elektroden [...] häufig Nickel oder eine Nickellegierung verwendet" wird. Weiter heißt es in diesem Dokument, dass Nickelschaum gebräuchlich als Ableiter der Elektroden ist.

Auch aus der US 2004/0157129 A1 (im Nachfolgenden bezeichnet als [V4]) geht eine wiederaufladbare

Batteriezelle mit einem auf $SO_2$-basierenden Elektrolyten hervor. Die Erfinder der [V4] haben festgestellt, dass unerwünschte Reaktionen des Ableitelementes mit dem auf $SO_2$-basierenden Elektrolyten, insbesondere mit den chloridhaltigen Leitsalzen, wie z.B. $LiAlCl_4$, stattfinden. Besonders tritt dieses Problem bei Batteriezellen auf, die beim Laden sehr hohe Zellspannungen (mehr als 4 Volt) erreichen. Das Problem wird durch eine Batteriezelle gelöst, bei der ein elektronisch leitendes Ableitelement mindestens einer Elektrode in einer Oberflächenschicht als Reaktionsschutzmaterial, das zum Schutz des Ableitelementes gegen unerwünschte Reaktionen dient, eine Legierung von Chrom mit einem anderen Metall und/oder ein Schutzmetall enthält.

Auch die EP 2534719 B1 (im Nachfolgenden bezeichnet als [V5]) offenbart einen auf $SO_2$-basierenden Elektrolyten mit unter anderem $LiAlCl_4$ als Leitsalz. Dieses $LiAlCl_4$ bildet mit dem $SO_2$ beispielsweise Komplexe der Formel $LiAlCl_4$* 1,5 mol $SO_2$ oder $LiAlCl_4$* 6 mol $SO_2$. Als positive Elektrode wird in der [V5] Lithiumeisenphosphat ($LiFePO_4$) verwendet. $LiFePO_4$ hat eine geringere Ladeschlussspannung (3,7 V) im Vergleich zu $LiCoO_2$ (4,2 V). Die Problematik der unerwünschten Reaktionen des Ableitelements tritt in dieser wiederaufladbaren Batteriezelle nicht auf, da obere Potentiale von 4,1 Volt nicht erreicht werden.

Eine Weiterentwicklung der [V5] in Bezug auf die positive Elektrode ist in der EP 3 734 724 A1 beschrieben. In demselben $SO_2$-basierten Elektrolyten werden mit schwefeldotiertem Lithiumeisenphosphat verbesserte Ergebnisse erzielt. Auch hier tritt die die Problematik der unerwünschten Reaktionen des Ableitelements nicht, da obere Potentiale von maximal 3,7 Volt erreicht werden.

Ein weiteres Problem bei den auf $SO_2$-basierenden Elektrolyten besteht darin, dass viele, insbesondere auch für organische Lithium-Ionen-Zellen bekannte Leitsalze nicht in $SO_2$ löslich sind.

So berichtet das US-Patent US 4,510,220, dass organischen Co-Lösungsmittel in auf $SO_2$-basierenden Elektrolyten eingesetzt werden, um Leitsalze, die sich sonst nicht in $SO_2$ lösen, in Lösung zu bringen. Allerdings neigen organischen Materialien dazu, an irreversiblen Reaktionen beteiligt zu sein. $SO_2$-basierte Elektrolyte ohne organische Co-Lösungsmittel, erfordern die Verwendung von Elektrolytsalzen, die sowohl im $SO_2$, welches im Allgemeinen ein schlechtes Lösungsmittel ist, allein löslich sind und zudem eine verwertbare leitfähige Elektrolytlösung liefern. Allein Salze wie Tetrachloraluminate, Tetrachlorogallate, Tetrachloroindate sowie Clovoborate der Alkali- oder Erdalkalimetalle erwiesen sich in $SO_2$ als nützlich (Clovoborate sind jedoch sehr teuer). Der Fokus in diesem US-Patent US 4,510,220 liegt auf einer Batteriezelle mit einer $PbS_2$-Kathode und einem auf $SO_2$-basierenden Elektrolyten der Zusammensetzung $LiAlCl_4$*$3SO_2$ oder $LiGaCl_4$*$3SO_2$.

Im Rahmen der Erfindung wurden Messungen von Löslichkeiten verschiedener Leitsalze in $SO_2$ durchgeführt. Tabelle 2 zeigt die Ergebnisse.

Tabelle 2: Löslichkeiten verschiedener Leitsalze in $SO_2$

| Leitsalz | Löslichkeit / mol/L in $SO_2$ | Leitsalz | Löslichkeit / mol/L in $SO_2$ |
|---|---|---|---|
| LiF | $2{,}1\cdot10^{-3}$ | $LiPF_6$ | $1{,}5\cdot10^{-2}$ |
| LiBr | $4.9\cdot10^{-3}$ | $LiSbF_6$ | $2.8\cdot10^{-4}$ |
| $Li_2SO_4$ | $2.7\cdot10^{-4}$ | $LiBF_2(C_2O_4)$ | $1{,}4\cdot10^{-4}$ |
| $LiB(C_2O_4)_2$ | $3.2\cdot10^{-4}$ | $CF_3SO_2NLiSO_2CF_3$ | $1{,}5\cdot10^{-2}$ |
| $Li_3PO_4$ | - | $LiBO_2$ | $2.6\cdot10^{-4}$ |
| $Li_3AlF_6$ | $2{,}3\cdot10^{-3}$ | $LiAlO_2$ | $4.3\cdot10^{-4}$ |
| $LiBF_4$ | $1.7\cdot10^{-3}$ | $LiCF_3SO_3$ | $6.3\cdot10^{-4}$ |
| $LiAsF_6$ | $1{,}4\cdot10^{-3}$ | | |

Messungen ergaben, dass $SO_2$ ein schlechtes Lösungsmittel für viele Leitsalze ist, wie z.B. Lithiumfluorid (LiF), Lithiumbromid (LiBr), Lithiumsulfat ($Li_2SO_4$), Lithiumbis(o-xalato)borat (LiBOB), Lithiumhexafluoroarsenat ($LiAsF_6$), Lithiumtetrafluorborat ($LiBF_4$), Trilithiumhexafluoroaluminat ($Li_3AlF_6$), Lithiumhexafluoroantimonat ($LiSbF_6$), Lithium Diflu-oro(oxalato)borat ($LiBF_2C_2O_4$), Lithium-bis(trifluoromethansulfonyl)imid (LiTFSI), Lithiummetaborat ($LiBO_2$), Lithiumaluminat ($LiAlO_2$), Lithiumtriflat ($LiCF_3SO_3$) und Lithiumchlorsulfonat ($LiSO_3Cl$). Die Löslichkeiten dieser Leitsalze liegen in $SO_2$ bei ca. $10^{-2}$ - $10^{-4}$ mol/L (siehe Tabelle 2). Bei diesen geringen Salz-Konzentrationen kann davon ausgegangen werden, dass allenfalls nur geringe Leitfähigkeiten vorliegen, die für den sinnvollen Betrieb einer wiederaufladbaren Batteriezelle nicht ausreichend sind.

Um die Einsatzmöglichkeiten sowie Eigenschaften von wiederaufladbaren Batteriezellen, die einen auf $SO_2$-basierenden Elektrolyten enthalten, weiter zu verbessern, liegt der vorliegenden Erfindung die Aufgabe zugrunde, eine wiederaufladbare Batteriezelle mit einem auf $SO_2$-basierenden Elektrolyten anzugeben, die gegenüber den aus dem Stand der Technik bekannten wiederaufladbaren Batteriezellen

- Elektroden mit inerten Ableitelementen aufweist, die keine Reaktionen mit dem auf $SO_2$-basierenden Elektrolyten zeigen und auch bei höheren Ladepotentialen stabil sind;
- Elektroden mit Ableitelementen aufweist, die sich weder bei hohen Potentialen auflösen noch oxidative Elektrolytzersetzung beschleunigen. Darüberhinausgehend dürfen Reaktionen zur Deckschichtbildung nicht beeinträchtigt werden.
- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- einen auf $SO_2$-basierenden Elektrolyten enthält, der eine für Leitsalze gute Löslichkeit aufweist und damit ein guter Ionenleiter und elektronischer Isolator ist, damit der Ionentransport erleichtert und die Selbstentladung auf ein Minimum beschränkt werden kann;
- einen auf $SO_2$-basierenden Elektrolyten enthält, der auch gegenüber anderen Komponenten der wiederaufladbaren Batteriezelle, wie Separatoren, Elektrodenmaterialien und Zellverpackungsmaterialien, inert ist,
- gegen verschiedene Missbräuche, wie elektrische, mechanische oder thermische, robust ist;
- einen auf $SO_2$-basierenden Elektrolyten enthält, der eine gesteigerte Stabilität gegenüber Restmengen an Wasser in den Zellkomponenten von wiederaufladbaren Batteriezellen aufweist;
- verbesserte elektrische Leistungsdaten, insbesondere eine hohe Energiedichte aufweist;
- eine verbesserte Überladefähigkeit und Tiefentladefähigkeit und eine geringere Selbstentladung aufweist;
- eine gesteigerte Lebensdauer, insbesondere eine hohe Zahl nutzbarer Lade- und Entladezyklen zeigt und
- einen möglichst niedrigen Preis und eine hohe Verfügbarkeit aufweist. Dies ist von besonderer Bedeutung bei großen Batterien oder bei Batterien mit einer großen Verbreitung.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen aufweisen, ohne dass sich hierbei der Elektrolyt im Betrieb der wiederaufladbaren Batteriezelle zersetzt.

Gelöst wird diese Aufgabe durch eine wiederaufladbare Batteriezelle mit den Merkmalen des Anspruchs 1. Die Ansprüche 2 bis 25 beschreiben vorteilhafte Weiterbildungen der erfindungsgemäßen wiederaufladbaren Batteriezelle.

Eine erfindungsgemäße wiederaufladbare Batteriezelle umfasst ein aktives Metall, zumindest eine positive Elektrode mit einem Ableitelement, zumindest eine negative Elektrode mit einem Ableitelement, ein Gehäuse und einen Elektrolyten. Das Ableitelement der positiven Elektrode und das Ableitelement der negativen Elektrode sind unabhängig voneinander aus einem Material ausgebildet, das ausgewählt ist aus der Gruppe, die gebildet wird von Aluminium und Kupfer. Der Elektrolyt basiert auf $SO_2$ und enthält zumindest ein erstes Leitsalz. Dieses erste Leitsalz weist die Formel (I)

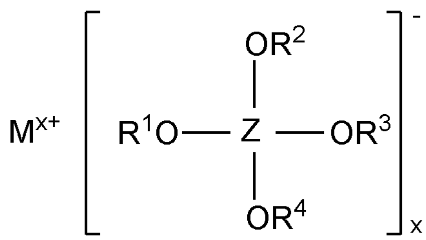

Formel (I)

auf. In Formel (I) ist M ein Metall, das ausgewählt ist aus der Gruppe, die gebildet wird von Alkalimetallen, Erdalkalimetallen, Metallen der Gruppe 12 des Periodensystems der Elemente und Aluminium. x ist eine ganze Zahl von 1 bis 3. Die Substituenten $R^1$, $R^2$, $R^3$ und $R^4$ sind unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{40}$ Cycloalkyl, $C_6$-$C_{14}$ Aryl und $C_5$-$C_{14}$ Heteroaryl. Das Zentralatom Z ist entweder Aluminium oder Bor.

Unter dem Begriff "Ableitelement" ist im Sinne der vorliegenden Erfindung ein elektronisch leitendes Element bezeichnet, welches dazu dient, den erforderlichen elektronisch leitenden Anschluss eines aktiven Materials der jeweiligen Elektrode an den äußeren Stromkreislauf zu ermöglichen. Hierfür steht das jeweilige Ableitelement in elektronisch leitendem Kontakt mit dem an der Elektrodenreaktion der jeweiligen Elektrode beteiligten, aktiven Material.

Der in der erfindungsgemäßen wiederaufladbaren Batteriezelle verwendete, auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in

welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{40}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen. Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_{5-}C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Ein wiederaufladbare Batteriezelle mit einem derartigen Elektrolyten hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, d.h. im Bereich zwischen der Ladeschlussspannung und der Entladeschlussspannung beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen. Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle. Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von $LiAlCl_4$ geringeren Leitfähigkeit des ersten Leitsalzes gemäß Formel (I).

Ableitelemente der positiven und negativen Elektrode

Nachfolgend sind vorteilhafte Weiterbildungen der erfindungsgemäßen wiederaufladbaren Batteriezelle im Hinblick auf das Ableitelement der positiven Elektrode und das Ableitelement der negativen Elektrode beschrieben: Sowohl die positive Elektrode als auch die negative Elektrode weisen erfindungsgemäß ein Ableitelement auf. Diese Ableitelemente dienen dazu, den erforderlichen elektronisch leitenden Anschluss des aktiven Materials der jeweiligen Elektrode an den äußeren Stromkreislauf zu ermöglichen. Hierfür steht das Ableitelement in Kontakt mit dem, an der Elektrodenreaktion der jeweiligen Elektrode beteiligten, aktiven Material. Wie bereits zuvor erwähnt, sind das Ableitelement der positiven Elektrode und das Ableitelement der negativen Elektrode erfindungsgemäß unabhängig voneinander aus einem Material ausgebildet, das ausgewählt ist aus der Gruppe, die gebildet wird von Aluminium und Kupfer. Eine vorteilhafte Ausgestaltung der erfindungsgemäßen wiederaufladbaren Batteriezelle sieht vor, dass das Ableitelement der positiven Elektrode aus Aluminium besteht. In einer weiteren vorteilhaften Ausgestaltung der erfindungsgemäßen wiederaufladbaren Batteriezelle ist das Ableitelement der negativen Elektrode aus Kupfer ausgebildet. Das Ableitelement der positiven Elektrode und/oder das Ableitelement der negativen Elektrode kann einteilig oder auch mehrteilig ausgebildet sein.

Das Ableitelement der positiven Elektrode und/oder das Ableitelement der negativen Elektrode kann planar in Form eines dünnen Metallblechs oder einer dünnen Metallfolie ausgebildet sein. Das dünne Metallblech oder die dünne Metallfolie können eine durchbrochene bzw. netzartige Struktur aufweisen. Das planare Ableitelement kann auch aus einer mit Metall beschichteten Kunststofffolie ausgebildet sein. Diese Metallbeschichtung weist vorzugsweise eine Dicke im Bereich von 0,1 $\mu$m bis 20 $\mu$m auf. Das aktive Material der jeweiligen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen bevorzugt eine Dicke im Bereich von 0,5 $\mu$m bis 50 $\mu$m, besonders bevorzugt im Bereich von 1 $\mu$m bis 20 $\mu$m auf. Bei der Verwendung von planaren Ableitelementen kann die jeweilige Elektrode eine Gesamtdicke von mindestens 20 $\mu$m, bevorzugt mindestens 40 $\mu$m und besonders bevorzugt mindestens 60 $\mu$m aufweisen. Die maximale Dicke beträgt vorzugsweise höchstens 300 $\mu$m, bevorzugt höchstens 150 $\mu$m und besonders bevorzugt höchstens 100 $\mu$m.

Die flächenspezifische Kapazität der positiven Elektrode und/oder der negativen Elektrode bezogen auf die Beschichtung einer Seite des jeweiligen Ableitelements weist bei der Verwendung des planaren Ableitelements vorzugsweise mindestens 0,5 mAh/cm$^2$ auf, wobei folgende Werte in dieser Reihenfolge weiter bevorzugt sind: 1 mAh/cm$^2$, 3 mAh/cm$^2$, 5 mAh/cm$^2$, 10 mAh/cm$^2$, 15 mAh/cm$^2$, 20 mAh/cm$^2$.

Wenn das Ableitelement planar in Form eines dünnen Metallblechs, einer dünnen Metallfolie oder einer mit Metall beschichteten Kunststofffolie ausgebildet ist, beträgt die Menge des aktiven Materials der negativen oder positiven Elektrode, d.h. die Beladung der Elektrode, bezogen auf die Beschichtung einer Seite vorzugsweise mindestens 1 mg/cm$^2$, bevorzugt mindestens 3 mg/cm$^2$, weiter bevorzugt mindestens 5 mg/cm$^2$, weiter bevorzugt mindestens 8 mg/cm$^2$, weiter bevorzugt mindestens 10 mg/cm$^2$, und besonders bevorzugt mindestens 20 mg/cm$^2$ auf.

Die maximale Beladung der Elektrode, bezogen auf die Beschichtung einer Seite beträgt bevorzugt höchstens 150 mg/cm$^2$, weiter bevorzugt höchstens 100 mg/cm$^2$ und besonders bevorzugt höchstens 80 mg/cm$^2$.

Weiterhin besteht auch die Möglichkeit, dass das Ableitelement der positiven Elektrode und/oder das Ableitelement der negativen Elektrode dreidimensional in Form einer porösen Metallstruktur, insbesondere in Form eines Metallschaums ausgebildet ist. Die dreidimensionale poröse Metallstruktur ist derartig porös, dass das aktive Material der jeweiligen Elektrode in die Poren der Metallstruktur eingearbeitet werden kann. Bei der Menge an eingearbeitetem bzw. aufgebrachten aktivem Material handelt es sich um die Beladung der Elektrode. Wenn das Ableitelement dreidimensional in Form einer porösen Metallstruktur, insbesondere in Form eines Metallschaums ausgebildet ist, dann weist die jeweilige Elektrode bevorzugt eine Dicke von mindestens 0,2 mm, weiter bevorzugt mindestens 0,3 mm, weiter bevorzugt mindestens 0,4 mm, weiter bevorzugt mindestens 0,5 mm und besonders bevorzugt mindestens 0,6 mm auf.

Eine weitere vorteilhafte Ausgestaltung der erfindungsgemäßen wiederaufladbaren Batteriezelle sieht vor, dass die flächenspezifische Kapazität der positiven Elektrode und/oder der negativen Elektrode bei der Verwendung eines dreidimensionalen Ableitelements, insbesondere in Form eines Metallschaums, vorzugsweise mindestens 2,5 mAh/cm$^2$ beträgt, wobei folgende Werte in dieser Reihenfolge weiter bevorzugt sind: 5 mAh/cm$^2$, 15 mAh/cm$^2$, 25 mAh/cm$^2$, 35 mAh/cm$^2$, 45 mAh/cm$^2$, 55 mAh/cm$^2$, 65 mAh/cm$^2$, 75 mAh/cm$^2$. Wenn das Ableitelement dreidimensional in Form einer porösen Metallstruktur, insbesondere in Form eines Metallschaums ausgebildet ist, beträgt die Menge des aktiven Materials der positiven oder negativen Elektrode, d.h. die Beladung der jeweiligen Elektrode, bezogen auf ihre Fläche, mindestens 10 mg/cm$^2$, bevorzugt mindestens 20 mg/cm$^2$, weiter bevorzugt mindestens 40 mg/cm$^2$, weiter bevorzugt mindestens 60 mg/cm$^2$, weiter bevorzugt mindestens 80 mg/cm$^2$ und besonders bevorzugt mindestens 100 mg/cm$^2$. Diese Beladung der jeweiligen Elektrode wirkt sich positiv auf den Ladevorgang sowie den Entladevorgang der wiederaufladbaren Batteriezelle aus. Die wiederaufladbare Batteriezelle kann auch zumindest eine positive Elektrode mit einem Ableitelement in Form einer porösen Metallstruktur, insbesondere in Form eines Metallschaums, und zumindest eine

negative Elektrode mit einem planaren Ableitelement in Form eines dünnen Metallblechs, einer dünnen Metallfolie oder einer mit Metall beschichteten Kunststofffolie umfassen. Alternativ hierzu kann die wiederaufladbare Batteriezelle aber auch zumindest eine negative Elektrode mit einem Ableitelement in Form einer porösen Metallstruktur, insbesondere in Form eines Metallschaums, und zumindest eine positive Elektrode mit einem planaren Ableitelement in Form eines dünnen Metallblechs, einer dünnen Metallfolie oder einer mit Metall beschichteten Kunststofffolie aufweisen.

Das aktive Material der positiven Elektrode kann das Ableitelement zumindest teilweise oder sogar vollständig bedecken. Weiterhin kann das aktive Material der negativen Elektrode das Ableitelement zumindest teilweise oder sogar vollständig bedecken.

Sowohl das planare wie auch das dreidimensionale Ableitelement können mehrteilig ausgebildet sein. Zur Kontaktierung der Ableitelemente kann die wiederaufladbare Batteriezelle weitere Bauteile aufweisen, wie beispielsweise Fahnen, Drähte, Bleche und dergleichen, die an dem jeweiligen Ableitelement angebracht sein. Diese Bauteile können aus demselben Material wie das jeweilige Ableitelement, also aus Aluminium oder Kupfer, oder aus einem anderen Material ausgebildet sein.

Elektrolyt

Nachfolgend sind vorteilhafte Weiterbildungen der wiederaufladbaren Batteriezelle im Hinblick, auf den auf $SO_2$-basierenden Elektrolyten beschrieben.

Wie bereits zuvor beschrieben, sind die Substituenten $R^1$, $R^2$, $R^3$ und $R^4$ in der Formel (I) des ersten Leitsalzes unabhängig voneinander ausgewählt aus der Gruppe, die gebildet wird von $C_1$-$C_{10}$ Alkyl, $C_2$-$C_{10}$ Alkenyl, $C_2$-$C_{10}$ Alkinyl, $C_3$-$C_{40}$ Cycloalkyl, $C_6$-$C_{14}$ Aryl und $C_{5-}C_{14}$ Heteroaryl. In einer weiteren vorteilhaften Ausgestaltung der wiederaufladbaren

Batteriezelle sind die Substituenten $R^1$, $R^2$, $R^3$ und $R^4$ des ersten Leitsalzes unabhängig voneinander ausgewählt aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;
- $C_3$-$C_6$ Cycloalkyl;
- Phenyl; und
- $C_5$-$C_7$ Heteroaryl.

Der Begriff "$C_1$-$C_6$ Alkyl" umfasst im Fall dieser vorteilhaften Ausgestaltung des auf $SO_2$-basierenden Elektrolyten lineare oder verzweigte gesättigte Kohlenwasserstoffgruppen mit einem bis sechs Kohlenwasserstoffgruppen, insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl und iso-Hexyl. Hierunter sind $C_2$-$C_4$ Alkyle bevorzugt. Besonders bevorzugt sind die $C_2$-$C_4$ Alkyle 2-Propyl, Methyl und Ethyl.

Der Begriff "$C_2$-$C_6$ Alkenyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl und 1-Hexenyl, wobei $C_2$-$C_4$ Alkenyle bevorzugt sind. Besonders bevorzugt sind Ethenyl und 1-Propenyl. Der Begriff "$C_2$-$C_6$-Alkinyl" umfasst im Fall dieser vorteilhaften Ausgestaltung des auf $SO_2$-basierenden Elektrolyten ungesättigte lineare oder verzweigte Kohlenwasserstoffgruppen mit zwei bis sechs Kohlenstoffatomen, wobei die Kohlenwasserstoffgruppen zumindest eine C-C-Dreifachbindung aufweisen. Hierunter fallen insbesondere Ethinyl, 1-Propinyl, 2-Propinyl, 1-n-Butinyl, 2-n-Butinyl, iso-Butinyl, 1-Pentinyl und 1- Hexinyl. Bevorzugt hierunter sind $C_2$-$C_4$-Alkinyle.

Der Begriff "$C_3$-$C_6$ Cycloalkyl" umfasst im Fall dieser vorteilhaften Ausgestaltung des auf $SO_2$-basierenden Elektrolyten zyklische gesättigte Kohlenwasserstoffgruppen mit drei bis sechs Kohlenstoffatomen. Hierunter fallen insbesondere Cyclopropyl, Cyclobutyl, Cyclopentyl und Cyclohexyl.

Der Begriff "$C_5$-$C_7$ Heteroaryl" umfasst im Fall dieser vorteilhaften Ausgestaltung des auf $SO_2$-basierenden Elektrolyten Phenyl und Naphtyl.

In einer weiteren vorteilhaften Weiterbildung der erfindungsgemäßen wiederaufladbaren Batteriezelle sind zumindest zwei der Substituenten $R^1$, $R^2$, $R^3$ und $R^4$ zur Ausbildung eines zweizähnigen Chelatliganden untereinander verbrückt. Ein solcher zweizähniger Chelatligand kann beispielsweise die folgende Struktur aufweisen:

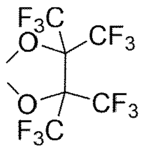

Vorzugsweise können auch drei oder sogar vier der Substituenten $R^1$, $R^2$, $R^3$ und $R^4$ zur Ausbildung eines dreizähnigen bzw. vierzähnigen Chelatliganden untereinander verbrückt sein. Der Chelatligand koordiniert an das Zentralatom Z unter Bildung eines Chelatkomplexes. Der Begriff "Chelatkomplex" - oder auch verkürzt als Chelat bezeichnet - steht für Komplexverbindungen, bei denen ein mehrzähniger Ligand (besitzt mehr als ein freies Elektronenpaar) mindestens zwei Koordinationsstellen (Bindungsstellen) des Zentralatoms einnimmt. Beim Zentralatom handelt es sich um das positiv geladene Metallionen $Al^{3+}$ oder $B^{3+}$. Liganden und Zentralatom sind über koordinative Bindungen verknüpft, das bedeutet, dass das bindende Elektronenpaar allein vom Liganden bereitgestellt wird.

Eine vorteilhafte Weiterbildung der erfindungsgemäßen wiederaufladbaren Batteriezelle weist eine Zellspannung von mindestens 4,0 Volt, bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt auf.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl. Die chemischen Gruppen $C_1$-$C_4$-Alkyl, $C_2$-$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine $OSO_2CF_3$-Gruppe ist.

In einer weiteren vorteilhaften Weiterbildung der wiederaufladbaren Batteriezelle ist das erste Leitsalz ausgewählt aus der Gruppe, die gebildet wird von

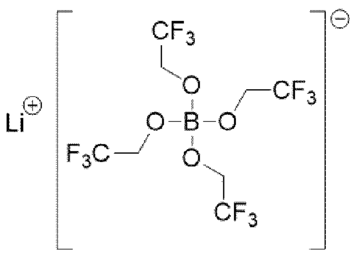

$Li[B(OCH_2CF_3)_4]$

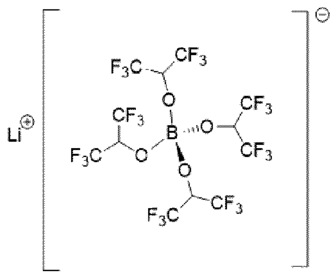

$Li[B(OCH(CF_3)_2)_4]$

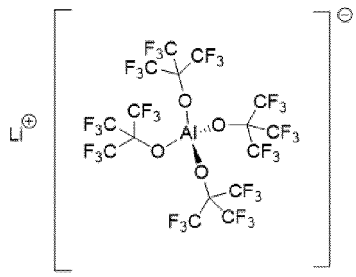

$Li[Al(OC(CF_3)_3)_4]$

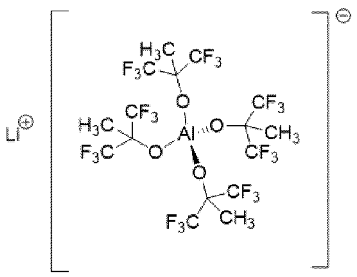

$Li[Al(OC(CH_3)(CF_3)_2)_4]$

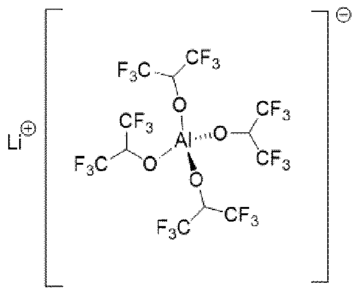

$Li[Al(OCH(CF_3)_2)_4]$

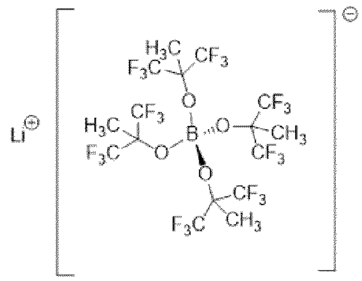

$Li\ [B(OC(CH_3)(CF_3)_2)_4]$

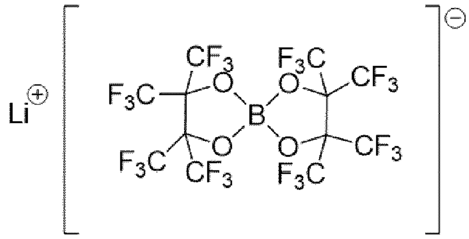

$LiB(O_2C_2(CF_3)_4)_2$

Das letztgenannte erste Leitsalz mit der Summenformel $LiB(O_2C_2(CF_3)_4)_2$ weist zwei, jeweils zweizähnige Chelatliganden mit der folgenden Struktur

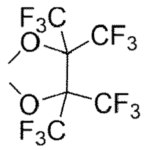

auf, die an das Zentralatom $B^{3+}$ unter Bildung des Chelatkomplexes koordiniert sind. Hierfür sind jeweils zwei perfluorierte Alkoxysubstituenten über eine C-C-Einfachbindung untereinander verbrückt.

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung. Die Alkalimetallverbindung oder die Lithiumverbindung sind ausgewählt aus der Gruppe, die gebildet wird von einem Aluminat, einem Halogenid, einem Oxalat, einem Borat, einem Phosphat, einem Arsenat und einem Gallat. Vorzugsweise ist das zweite Leitsalz ein Lithiumtetrahalogenoaluminat, insbesondere $LiAlCl_4$.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetraf-luor(oxalato) phosphat, Lithiumoxalat, 2-Vinylpyridin, 4-Vinylpyridin, cyclische Exomethylencarbonate, Sulfonen, cyclische und acyclische Sulfonaten, acyclische Sulfiten, cyclischen und acyclischen Sulfinate, organische Ester anorganischer Säuren, acyclischen und cyclischen Alkane, welche acyclischen und cyclischen Alkane einen Siedepunkt bei 1 bar von mindestens 36 °C aufweisen, aromatischen Verbindungen, halogenierten cyclischen und acyclischen Sulfonylimiden, halogenierten cyclischen und acyclischen Phosphatestern, halogenierten cyclischen und acyclischen Phosphinen, halogenierten cyclischen und acyclischen Phosphiten, halogenierten cyclischen und acyclischen Phosphazenen, halogenierten cyclischen und acyclischen Silylamine, halogenierten cyclischen und acyclischen halogenierten Estern, halogenierten cyclischen und acyclischen Amiden, halogenierten cyclischen und acyclischen Anhydriden und halogenierten organischen Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden. Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

Aktives Metall

Nachfolgend sind vorteilhafte Weiterbildungen der erfindungsgemäßen wiederaufladbaren Batteriezelle im Hinblick auf das aktive Metall beschrieben:
In einer vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Positive Elektrode

Nachfolgend sind vorteilhafte Weiterbildungen der erfindungsgemäßen wiederaufladbaren Batteriezelle im Hinblick auf die positive Elektrode beschrieben:
Eine erste vorteilhafte Weiterbildung der erfindungsgemäßen wiederaufladbaren Batteriezelle sieht vor, dass die positive Elektrode mindestens bis zu einem oberen Potenzial von 4,0 Volt, bevorzugt bis zu einem Potenzial von 4,4 Volt weiter

bevorzugt von mindestens einem Potenzial von 4,8 Volt, weiter bevorzugt mindestens bis zu einem Potenzial von 5,2 Volt, weiter bevorzugt mindestens bis zu einem Potenzial von 5,6 Volt und besonders bevorzugt mindestens bis zu einem Potenzial von 6,0 Volt ladbar ist.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls speichern und während des Betriebs der Batteriezelle die Ionen des aktiven Metalls abgeben und wieder aufnehmen.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladbaren Batteriezelle die Zusammensetzung
$A_xM'_yM''_zO_a$ auf. In dieser Zusammensetzung $A_xM'_yM''_zO_a$ ist/sind

- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall, das ausgewählt ist aus der Gruppe, die gebildet wird von den Elementen Ti, V, Cr, Mn, Fe, Co, Ni, Cu und Zn;
- M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0;
- z eine Zahl größer oder gleich 0; und
- a eine Zahl größer 0.

A ist vorzugsweise das Metall Lithium, d.h. die Verbindung kann die Zusammensetzung $Li_xM'_yM''_zO_a$ aufweisen.

Die Indizes y und z in der Zusammensetzung $A_xM'_yM''_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1+y2, wobei y1und y2 die Indizes der Metalle $M'^1$ und $M'^2$ darstellen. Die Indizes x, y, z und a müssen so gewählt werden, dass eine Ladungsneutralität innerhalb der Zusammensetzung herrscht.

Beispiele für Verbindungen bei denen M' zwei Metalle umfasst sind Lithiumnickelmangancobaltoxide der Zusammensetzung $Li_xNi_{y1}Mn_{y2}Co_zO_2$ mit $M'^1$=Ni, $M'^2$=Mn und M"=Co. Beispiele für Verbindungen in denen z=0 ist, die also kein weiteres Metall oder Element M" aufweisen sind Lithiumkobaltoxide $Li_xCo_yO_a$. Umfasst zum Beispiel M" zwei Elemente, zum einen ein Metall $M''^1$ und zum anderen Phosphor als $M''^2$, so gilt für den Index z: z=z1+z2, wobei z1und z2 die Indizes des Metalls $M''^1$ und des Phosphors ($M''^2$) darstellen. Die Indizes x, y, z und a müssen so gewählt werden, dass eine Ladungsneutralität innerhalb der Zusammensetzung herrscht. Beispiele für Verbindungen bei denen A Lithium, M" ein Metall $M''^1$ und Phosphor als $M''^2$ umfasst sind Lithiumeisenmanganphosphate $Li_xFe_yMn_{z1}P_{z2}O_4$ mit A=Li, M'=Fe, $M''^1$=Mn und $M''^2$=P und z2=1. In einer weiteren Zusammensetzung kann M" zwei Nichtmetalle, zum Beispiel Fluor als $M''^1$ und Schwefel als $M''^2$, umfassen. Beispiele für solche Verbindungen sind Lithiumeisenfluorsulfate $Li_xFe_yF_{z1}S_{z2}O_4$ mit A= Li, M'=Fe, $M''_1$=F und $M''_2$=P.

Eine weitere vorteilhafte Weiterbildung der erfindungsgemäßen wiederaufladbaren Batteriezelle sieht vor, dass M' aus den Metallen Nickel und Mangan besteht und M" Cobalt ist. Es kann sich dabei um Zusammensetzungen der Formel $Li_xNi_{y1}Mn_{y2}Co_zO_2$ (NMC) handeln, d.h. um Lithiumnickelmangancobaltoxide, die die Struktur von Schichtoxiden aufweisen. Beispiele für diese aktiven Materialien aus Lithiumnickelmangancobaltoxid sind $LiNi_{1/3}Mn_{1/3}CO_{1/3}O_2$ (NMC111), $LiNi_{0.6}Mn_{0.2}Co_{0.2}O_2$ (NMC622) und $LiNi_{0.8}Mn_{0.1}Co_{0.1}O_2$ (NMC811). Weitere Verbindungen aus Lithiumnickelmangancobaltoxid können die Zusammensetzung $LiNi_{0,5}Mn_{0,3}Co_{0,2}O_2$, $LiNi_{0,5}Mn_{0,25}Co_{0,25}O_2$, $LiNi_{0,52}Mn_{0,32}Co_{0,16}O_2$, $LiNi_{0,55}Mn_{0,30}Co_{0,15}O_2$, $LiNi_{0,58}Mn_{0,14}Co_{0,28}O_2$, $LiNi_{0,64}Mn_{0,18}Co_{0,18}O_2$, $LiNi_{0,65}Mn_{0,27}Co_{0,08}O_2$, $LiNi_{0,7}Mn_{0,2}Co_{0,1}O_2$, $LiNi_{0,7}Mn_{0,15}Co_{0,15}O_2$, $LiNi_{0,12}Mn_{0,10}Co_{0,18}O_2$, $LiNi_{0,76}Mn_{0,14}Co_{0,10}O_2$, $LiNi_{0,86}Mn_{0,04}Co_{0,10}O_2$, $LiNi_{0,90}Mn_{0,05}Co_{0,05}O_2$, $LiNi_{0,95}Mn_{0,025}Co_{0,025}O_2$ oder eine Kombination davon aufweisen. Mit diesen Verbindungen lassen sich positive Elektroden für wiederaufladbare Batteriezellen mit einer Zellspannung von über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (in Engl.: Lithium- and Manganese-Rich Oxide Material). Dieses Metalloxid kann die Zusammensetzung $Li_xMn_yM''_zO_a$ aufweisen. M' stellt in der oben beschriebenen Formel $Li_xM'_yM''_zO_a$ somit das Metall Mangan (Mn) dar. Der Index x ist hier größer oder gleich 1, der Index y ist größer als der Index z bzw. größer als die Summe der Indizes z1+z2+z3 etc.. Umfasst z.B. M" zwei Metalle $M''^1$ und $M''^2$ mit den Indizes z1 und z2 (z.B. $Li_{1.2}Mn_{0.525}Ni_{0.175}Co_{0.1}O_2$ mit $M''^1$=Ni z1=0,175 und $M''^2$=Co z2=0, 1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_3\cdot(1\text{-}m)LiM'O_2$ mit $0 < m < 1$ beschrieben werden. Beispiele für derartige Verbindungen sind $Li_{1.2}Mn_{0.525}Ni_{0.175}Co_{0.1}O_2$, $Li_{1.2}Mn_{0.6}Ni_{0.2}O_2$ oder $Li_{1.2}Ni_{0.13}Co_{0.13}Mn_{0.54}O_2$.

Eine weitere vorteilhafte Weiterbildung der erfindungsgemäßen wiederaufladbaren Batteriezelle sieht vor, dass die Zusammensetzung die Formel $A_xM'_yM''_zO_4$ aufweist. Bei diesen Verbindungen handelt es sich um Spinell-Strukturen. Zum Beispiel können A Lithium, M' Kobalt und M" Mangan sein. In diesem Fall handelt es sich bei dem aktiven Material um Lithiumcobaltmanganoxid ($LiCoMnO_4$). Mit $LiCoMnO_4$ lassen sich positive Elektroden für wiederaufladbare Batteriezellen mit einer Zellspannung von über 4,6 Volt herstellen. Dieses $LiCoMnO_4$ ist vorzugsweise $Mn^{3+}$ frei. In einem weiteren Beispiel können M' Nickel und M" Mangan sein. In diesem Fall handelt es sich bei dem aktiven Material um Lithiumnickelmanganoxid ($LiNiMnO_4$). Die molaren Anteile der beiden Metalle M' und M" können variieren. Lithiumnickelmanganoxid kann zum Beispiel die Zusammensetzung $LiNi_{0,5}Mn_{1,5}O_4$ aufweisen.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Lithium oder Natrium, eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

Typ A: $MX_z + y\ Li \leftrightarrow M + z\ Li_{(y/z)}X$

Typ B: $X + y\ Li \leftrightarrow Li_yX$

Beispiele für Umwandlungsverbindungen sind $FeF_2$, $FeF_3$, $CoF_2$, $CuF_2$, $NiF_2$, $BiF_3$, $FeCl_3$, $FeCl_2$, $CoCl_2$, $NiCl_2$, $CuCl_2$, AgCl, LiCl, S, $Li_2S$, Se, $Li_2Se$, Te, I und LiI.

In einer weiteren vorteilhaften Weiterbildung weist die Verbindung die Zusammensetzung $A_xM'_yM''^1_{z1}M''^2_{z2}O_4$ auf, worin $M''^1$ ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ das Element Phosphor ist, x und y unabhängig voneinander Zahlen größer 0 sind, z1 eine Zahl größer 0 ist und z2 den Wert 1 aufweist. Bei der Verbindung mit der Zusammensetzung $A_xM'_yM''^1_{z1}M''^2_{z2}O_4$ handelt es sich um sogenannte Lithiummetallphosphate. Insbesondere weist diese Verbindung die Zusammensetzung $Li_xFe_yMn_{z1}P_{z2}O_4$ auf. Beispiele für Lithiummetallphosphate sind Lithiumeisenphosphat ($LiFePO_4$) oder Lithiumeisenmanganphosphate ($Li(Fe_yMn_z)PO_4$). Ein Beispiel für ein Lithiumeisenmanganphosphat ist das Phosphat der Zusammensetzung $Li(Fe_{0.3}Mn_{0.7})PO_4$. Ein Beispiel für ein Lithiumeisenmanganphosphat ist das Phosphat der Zusammensetzung $Li(Fe_{0.3}Mn_{0.7})PO_4$.Auch Lithiummetallphosphate anderer Zusammensetzungen können für die erfindungsgemäße Batteriezelle verwendet werden.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe, die gebildet wird von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass die positive Elektrode zumindest eine Metallverbindung enthält, die die chemische Struktur eines Spinells, eines Schichtoxids, einer Umwandlungsverbindung oder einer Polyanionischen Verbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das

auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Negative Elektrode

Nachfolgend sind vorteilhafte Weiterbildungen der erfindungsgemäßen wiederaufladbaren Batteriezelle im Hinblick auf die negative Elektrode beschrieben:
Eine weitere vorteilhafte Weiterbildung der wiederaufladbaren Batteriezelle sieht vor, dass die negative Elektrode eine Insertionselektrode ist. Diese Insertionselektrode enthält ein Insertionsmaterial als aktives Material, in welches die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Wird beispielsweise ein Leitsalz auf Lithium-Basis verwendet, so können Lithiumionen während des Ladens der wiederaufladbaren Batteriezelle in das Insertionsmaterial eingelagert und während des Entladens der wiederaufladbare Batteriezelle aus diesem ausgelagert werden. Vorzugsweise enthält die negative Elektrode als aktives Material bzw. Insertionsmaterial Kohlenstoff, insbesondere in der Modifikation Graphit. Es liegt jedoch auch im Rahmen der Erfindung, dass der Kohlenstoff in Form von Naturgraphit (Flocken-Fördermittel oder gerundet), synthetischem Graphit (Mesophasen Graphit), graphitiertem MesoCarbon MicroBeads (MCMB), mit kohlenstoffbeschichtetem Graphit oder amorphem Kohlenstoff vorliegt.

Die negative Elektrode umfasst in einer weiteren vorteilhaften Weiterbildung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. $Li_4Ti_5O_{12}$).

Eine weitere vorteilhafte Weiterbildung der erfindungsgemäßen wiederaufladbaren Batteriezelle sieht vor, dass die negative Elektrode mit Lithium Legierungsbildende-Anodenaktivmaterialien umfasst. Das sind zum Beispiel Lithium-speichernde Metalle und Metalllegierungen (z.B. Si, Ge, Sn, $SnCo_xC_y$, $SnSi_x$ und dergleichen) und Oxide der Lithium-speichernden Metalle und Metalllegierungen (z.B. $SnO_x$, $SiO_x$, oxidische Gläser von Sn, Si und dergleichen).

Die negative Elektrode enthält in einer weiteren vorteilhaften Weiterbildung der erfindungsgemäßen wiederaufladbaren Batteriezelle Konversions-Anodenaktivmaterialien. Diese Konversions-Anodenaktivmaterialien können beispielsweise Übergangsmetalloxide in Form von Manganoxiden ($MnO_x$), Eisenoxiden ($FeO_x$), Cobaltoxiden ($CoO_x$), Nickeloxiden ($NiO_x$), Kupferoxiden ($CuO_x$) oder Metallhydride in Form von Magnesiumhydrid ($MgH_2$), Titanhydrid ($TiH_2$), Aluminiumhydrid ($AlH_3$) und Bor-, Aluminium- und Magnesiumbasierte ternäre Hydride und dergleichen sein.

In einer weiteren vorteilhaften Weiterbildung der erfindungsgemäßen wiederaufladbaren Batteriezelle umfasst die negative Elektrode ein Metall, insbesondere metallisches Lithium.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche aufweisen, Beispiele für Leitfähigkeitsadditive sind

partikulärer Kohlenstoff (carbon black, Super P, acetylen black), faserartiger Kohlenstoff (CarbonNanoTubes CNT, Kohlenstoff(nano)fasern), feinverteilte Graphite und Graphen(-Nanos-heets).

Aufbau der wiederaufladbaren Batteriezelle

Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt.

Die wiederaufladbare Batteriezelle kann jedoch auch als Wickelzelle ausgebildet sein, bei welcher die Elektroden aus dünnen Lagen bestehen, die zusammen mit einem Separatormaterial aufgewickelt sind. Die Separatoren trennen einerseits die positive Elektrode und die negative Elektrode räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen. Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede Positive Elektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2: zeigt eine elektronenmikroskopische Aufnahme der dreidimensionalen porösen Struktur des Metallschaums des ersten Ausführungsbeispiels aus Figur 1 als Detaildarstellung;

Figur 3: zeigt ein zweites Ausführungsbeispiel einer erfindungsgemäßen wiederaufladbaren Batteriezelle in einer Querschnittsdarstellung;

Figur 4: zeigt ein Detail des zweiten Ausführungsbeispiels aus Figur 3;

Figur 5: zeigt ein drittes Ausführungsbeispiel der erfindungsgemäßen wiederaufladbaren Batteriezelle in einer Explosionsdarstellung;

Figur 6: zeigt das Potential in [V] von zwei Test-Vollzellen mit Graphitelektroden mit Kupfer- oder Nickelableitelement, die mit dem Referenzelektrolyten aus Beispiel 1 befüllt wurden, beim Laden als Funktion der Kapazität, die bezogen ist auf die theoretische Kapazität der negativen Elektrode, während einer Deckschichtbildung auf der negativen Elektrode;

Figur 7: zeigt die Entladekapazität als Funktion der Zykelzahl von zwei Test-Vollzellen mit Graphitelektroden mit Kupfer- bzw. Nickelableitelement, wobei die Test-Vollzellen mit dem Referenzelektrolyten befüllt sind;

Figur 8: zeigt das Potential in [V] von zwei Test-Vollzellen mit Graphitelektroden mit Kupfer- bzw. Nickelableitelement, die mit dem Elektrolyten 1 befüllt wurden, beim Laden als Funktion der Kapazität, die bezogen ist auf die theoretische Kapazität der negativen Elektrode, während einer Deckschichtbildung auf der negativen Elektrode;

Figur 9: zeigt die Entladekapazität als Funktion der Zykelzahl von zwei Test-Vollzellen mit Graphitelektroden mit Kupfer- bzw. Nickelableitelement, wobei die Test-Vollzellen mit dem Elektrolyten 1 befüllt sind;

Figur 10 zeigt eine Fotographie des Kupfer-Ableitelements nach der Messung aus Figur 9;

Figur 11: zeigt den Potentialverlauf beim Laden und Entladen in Volt als Funktion der prozentualen Ladung eines Zyklus einer Halbzelle mit einer Graphitelektrode mit einem Kupfer-Ableitelement, wobei die Halbzelle mit dem Elektrolyten 5 befüllt ist;

Figur 12: zeigt das Potential und die Stromstärke als Funktion der Zeit von Halbzellen mit Aluminium-Ableitelement, wobei die Halbzellen entweder mit dem Referenzelektrolyten oder mit dem Elektrolyt 1 befüllt sind;

Figur 13: zeigt ein Aluminium-Ableitelement vor dem Experiment in der Halbzelle mit Referenzelektrolyt aus Figur 12;

Figur 14: zeigt das Aluminium-Ableitelement nach dem Experiment in der Halbzelle mit Referenzelektrolyt aus Figur 12;

Figur 15: zeigt das Aluminium-Ableitelement nach dem Experiment in der Halbzelle mit Elektrolyt 1 aus Figur 12;

Figur 16: zeigt den Potentialverlauf beim Laden und Entladen in Volt als Funktion der prozentualen Ladung des ersten Zyklus einer Halbzelle mit einer positiven Elektrode mit Aluminium-Ableitelement, wobei die Halbzelle mit dem Elektrolyten 1 befüllt ist;

Figur 17: zeigt die Entladekapazität als Funktion der Zykelzahl einer Test-Vollzelle mit einer positiven Elektrode mit Aluminium-Ableitelement, wobei die Test-Vollzelle mit dem Elektrolyten 1 befüllt ist;

Figur 18: zeigt die Entladekapazitäten als Funktion der Zykelzahl von zwei Vollzellen mit positiven Elektroden mit Aluminium-Ableitelement und negativen Elektroden mit Kupfer-Ableitelement, wobei die Vollzellen mit dem Elektrolyten 1 befüllt sind und die Ladeschlussspannung 4,3 bzw. 4,6 Volt beträgt;

Figur 19: zeigt den Potentialverlauf beim Laden und Entladen in Volt als Funktion der prozentualen Ladung des ersten Zyklus einer Halbzelle mit einer positiven Elektrode mit Aluminium-Ableitelement, wobei die Halbzelle mit dem Elektrolyten 5 befüllt ist;

Figur 20: zeigt das Potential in [V] von drei Test-Vollzellen, die mit den Elektrolyten 1 und 3 aus Beispiel 2 und dem Referenzelektrolyten aus Beispiel 1 befüllt wurden, beim Laden einer negativen Elektrode als Funktion

der Kapazität, die bezogen ist auf die theoretische Kapazität der negativen Elektrode, während einer Deckschichtbildung auf der negativen Elektrode;

Figur 21: zeigt den Potentialverlauf bei der Entladung in Volt als Funktion der prozentualen Ladung von vier Test-Vollzellen, die mit den Elektrolyten 1, 3, 4 und 5 aus Beispiel 2 befüllt wurden und Lithiumnickelmangancobaltoxid (NMC) als aktives Elektrodenmaterial enthielten;

Figur 22: zeigt die Leitfähigkeiten in [mS/cm] der Elektrolyten 1, 4 und 6 aus Beispiel 2 in Abhängigkeit von der Konzentration der Verbindungen 1, 4 und 6; und

Figur 23: zeigt die Leitfähigkeiten in [mS/cm] des Elektrolyten 3 und 5 aus Beispiel 2 in Abhängigkeit von der Konzentration der Verbindungen 3 und 5.

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf $SO_2$-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um $LiCoMnO_4$ mit einer Spinell-Struktur. Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle 2 kann jedoch auch als Wickelzelle ausgebildet sein, bei welcher die Elektroden aus dünnen Lagen bestehen, die zusammen mit einem Separatormaterial aufgewickelt sind. Die Separatoren 11 trennen einerseits die positive Elektrode 4 und die negative Elektrode 5 räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen. Die Elektroden 4, 5 weisen weiterhin jeweils ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Die Ableitelemente sind in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist jeweils in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4. Im vorliegenden ersten Ausführungsbeispiel ist ein Ableitelement der positiven Elektrode 4 aus Aluminium und ein Ableitelement der negativen Elektrode 5 aus Kupfer ausgebildet.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 $\mu$m haben, also verhältnismäßig groß sind.

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein zweites Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den

Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 μm auf.

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Beispiel 1: Herstellung eines Referenzelektrolyten

Ein für die nachfolgend beschriebenen Beispiele verwendeter Referenzelektrolyt wurde nach dem in der Patentschrift EP 2 954 588 B1 beschriebenen Verfahren hergestellt (im Nachfolgenden bezeichnet als [V6]). Zunächst wurde Lithiumchlorid (LiCl) unter Vakuum bei 120 °C für drei Tage getrocknet. Aluminiumpartikel (Al) wurden unter Vakuum für zwei Tage bei 450 °C getrocknet. LiCl, Aluminiumchlorid ($AlCl_3$) und Al wurden in einem Molverhältnis $AlCl_3$:LiCl:Al von 1:1,06:0,35 in einer Glasflasche mit einer Öffnung, die den Austritt von Gas ermöglicht, miteinander vermischt. Daraufhin wurde diese Mischung stufenweise zur Herstellung einer Salzschmelze wärmebehandelt. Nach dem Abkühlen wurde die gebildete Salzschmelze gefiltert, danach auf Raumtemperatur abgekühlt und letztlich $SO_2$ zugeführt bis das gewünschte molare Verhältnis von $SO_2$ zu $LiAlCl_4$ gebildet wurde. Der so gebildete Referenzelektrolyt hatte die Zusammensetzung $LiAlCl_4$ * x $SO_2$, wobei x abhängig von der zugeführten Menge an $SO_2$ ist.

Beispiel 2: Herstellung von sechs Ausführungsbeispielen 1, 2, 3, 4, 5 und 6 eines auf $SO_2$-basierenden Elektrolyten für eine Batteriezelle

Für die nachfolgend beschriebenen Experimente wurden sechs Ausführungsbeispiele 1, 2, 3, 4, 5 und 6 des auf $SO_2$-basierenden Elektrolyten hergestellt (nachfolgend bezeichnet als Elektrolyte 1, 2, 3, 4, 5 und 6). Hierfür wurden zunächst fünf unterschiedliche erste Leitsalze nach Formel (I) gemäß einem in den folgenden Dokumenten [V7], [V8] und [V9] beschriebenen Herstellungsverfahren hergestellt:

[V7] "I. Krossing, Chem. Eur. J. 2001, 7, 490;
[V8] S. M. Ivanova et al., Chem. Eur. J. 2001, 7, 503;
[V9] Tsujioka et al., J. Electrochem. Soc., 2004, 151, A1418"

Diese sechs unterschiedlichen, ersten Leitsalze nach Formel (I) werden nachfolgend als Verbindungen 1, 2, 3, 4, 5 und 6 bezeichnet. Sie stammen aus der Familie der Polyfluoroalkoxyaluminate und wurden gemäß folgender Reaktionsgleichung ausgehend von $LiAlH_4$ und dem entsprechenden Alkohol R-OH mit $R^1=R^2=R^3=R^4$ in Hexan hergestellt.

$$LiAlH_4 + 4\ HO\text{-}R \xrightarrow{\text{Hexan}} LiAl(OR)_4 + 4\ H_2$$

Chelatkomplexe wurden ausgehend von dem entsprechenden Diol HO-R-OH gemäß einem im folgenden Dokument [V10] beschriebenen Herstellungsverfahren hergestellt: [V10] Wu Xu et al., Electrochem. Solid-State Lett. 2000, 3, 366-368

Hierdurch wurden die nachfolgend darstellten Verbindungen 1, 2, 3, 4, 5 und 6 mit den Summen- bzw. Strukturformeln gebildet:

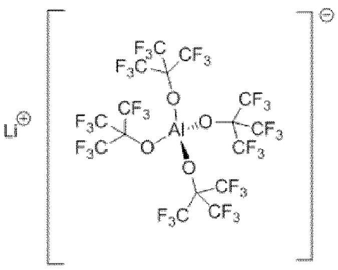

Li $[Al(OC(CF_3)_3)_4]$

Verbindung 1

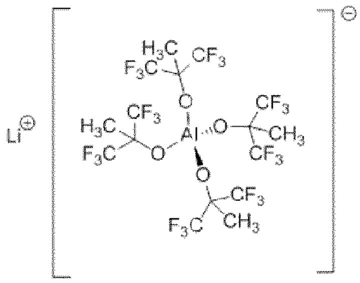

Li $[Al(OC(CH_3)(CF_3)_2)_4]$

Verbindung 2

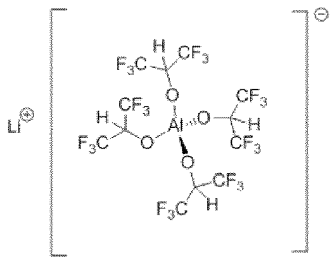

Li $[Al(OCH(CF_3)_2)_4]$

Verbindung 3

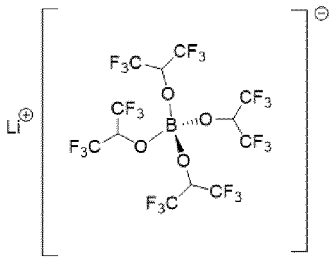

$Li[B(OCH(CF_3)_2)_4]$

Verbindung 4

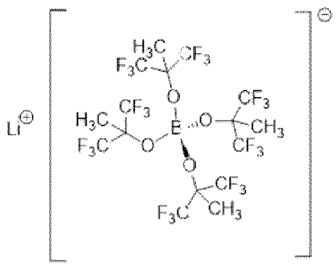

Li $[B(OC(CH_3)(CF_3)_2)_4]$

Verbindung 5

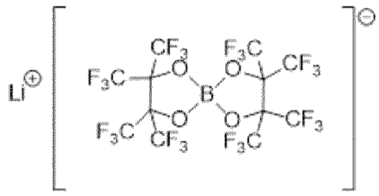

$LiB(O_2C_2(CF_3)_4)_2$

Verbindung 6

Zur Aufreinigung wurden die Verbindungen 1, 2, 3, 4, 5 und 6 zunächst umkristallisiert. Hierdurch wurden Reste des Edukts $LiAlH_4$ aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3, 4, 5 und 6 in $SO_2$. Hierbei wurde herausgefunden, dass sich die Verbindungen 1, 2, 3, 4, 5 und 6 in $SO_2$ gut lösen.

Die Herstellung der Elektrolyte 1, 2, 3, 4, 5 und 6 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3, 4,5 und 6 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3, 4, 5 und 6 in den Elektrolyten 1, 2, 3, 4, 5 und 6 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3, 4, 5 und 6 und dem Referenzelektrolyten wurden die nachfolgend beschriebenen Experimente durchgeführt.

Beispiel 3: Herstellung von Test-Vollzellen

Die in den nachfolgend beschriebenen Experimenten verwendeten Test-Vollzellen sind wiederaufladbare Batteriezellen mit zwei negativen Elektroden und einer positiven Elektrode, welche jeweils durch einen Separator getrennt waren. Die positiven Elektroden wiesen ein aktives Material, einen Leitfähigkeitsvermittler, ein Bindemittel und ein Ableitelemente auf. Das aktive Material der positiven Elektrode ist im jeweiligen Experiment benannt. Die negativen Elektroden enthielten Graphit als aktives Material, ein Bindemittel und ebenfalls ein Ableitelement. Wenn im Experiment erwähnt, können die negativen Elektroden auch ein Leitfähigkeitsadditiv enthalten. Die Materialien der Ableitelemente der positiven und der negativen Elektrode sind Aluminium und Kupfer und im jeweiligen Experiment benannt. Als Referenzmaterial aus dem Stand der Technik dient das Ableitmaterial Nickel. Unter anderem ist das Ziel der Untersuchungen, die Verwendung der Ableitmaterialien Aluminium und Kupfer für die positive Elektrode und die negative Elektrode in einer erfindungsgemäßen Batteriezelle zu bestätigen. Tabelle 3 zeigt, welche Versuche mit den verschiedenen Ableitmaterialien durchgeführt wurden.

Die Test-Vollzellen wurden jeweils mit dem für die Experimente benötigten Elektrolyten, d. h. entweder mit dem

Referenzelektrolyten oder den Elektrolyten 1, 2, 3, 4, 5 oder 6 befüllt. Für jedes Experiment wurden mehrere, d.h. zwei bis vier identische Test-Vollzellen hergestellt. Die in den Experimenten vorgestellten Ergebnisse sind jeweils Mittelwerte aus den für die identischen Test-Vollzellen erhaltenen Messwerte.

Beispiel 4: Messung in Test-Vollzellen

Deckschichtkapazität:

Die im ersten Zyklus verbrauchte Kapazität für die Bildung einer Deckschicht auf der negativen Elektrode ist ein wichtiges Kriterium für die Qualität einer Batteriezelle. Diese Deckschicht wird beim ersten Laden der Test-Vollzelle auf der negativen Elektrode gebildet. Für diese Deckschichtbildung werden Lithiumionen irreversibel verbraucht (Deckschichtkapazität), sodass der Test-Vollzelle weniger zykelbare Kapazität für die Folgezyklen zur Verfügung steht. Die Deckschichtkapazität in % der Theorie, die zur Bildung der Deckschicht auf der negativen Elektrode verbraucht wurde, berechnet sich gemäß nachfolgend genannter Formel:

$$\text{Deckschichtkapazität [in \% der Theorie]} = (Q_{lad}\ (x\ \text{mAh}) - Q_{ent}\ (y\ \text{mAh}))\ /\ Q_{NEL}$$

$Q_{lad}$ beschreibt die im jeweiligen Experiment vorgegebene Ladungsmenge in mAh; $Q_{ent}$ beschreibt diejenige Ladungsmenge in mAh, die beim anschließenden Entladen der Test-Vollzelle erhalten wurde. Bei $Q_{NEL}$ handelt es sich um die theoretische Kapazität der verwendeten negativen Elektrode. Die theoretische Kapazität berechnet sich z.B. im Fall von Graphit auf einen Wert von 372 mAh/g.

Entladekapazität:

Bei Messungen in Test-Vollzellen wird z.B. die Entladekapazität über die Zykelzahl bestimmt werden. Dazu werden die Test-Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer I/U-Ladung. Dieser Vorgang wird je nach gewünschter Zykelzahl wiederholt.
Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.
Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.
Bevorzugt erfolgt die Ladung der Batterie mit einer Stromrate von C/2 und bei einer Temperatur von 22°C.
Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.
Bevorzugt erfolgt die Entladung der Batterie mit einer Stromrate von C/2 und bei einer Temperatur von 22°C.
Die Entladekapazität wird aus dem Entladestrom und der Zeit, bis die Kriterien zur Beendigung der Entladung erfüllt sind, erhalten. Die dazugehörigen
Figuren zeigen Mittelwerte für die Entladekapazitäten als Funktion der Zykelzahl. Diese Mittelwerte der Entladekapazitäten werden, oft normiert auf 100% der Startkapazität und jeweils in Prozent der Nennkapazität ausgedrückt.
Die folgenden Experimente untersuchen die Eigenschaften von Ableitelementen, die entweder aus Nickel, Kupfer oder Aluminium ausgebildet sind. Ableitelemente aus Nickel werden laut [V3] normalerweise im Elektrolyten $LiAlCl_4 * x\ SO_2$ aus dem Stand der Technik eingesetzt, der im Nachfolgenden als Referenzelektrolyt bezeichnet ist. Diese Ableitelemente aus Nickel werden im Nachfolgenden als Nickel-Ableitelemente bezeichnet (siehe Beispiel 1). Deshalb wurden Experimente zum einen im Referenzelektrolyten $Li\text{-}AlCl_4 * x\ SO_2$ und zum anderen in verschiedenen Elektrolyten durchgeführt, die auch Bestandteil der erfindungsgemäßen wiederaufladbaren Batteriezelle sein können. Die aus der Literatur bekannten elektrischen Leitfähigkeiten von Kupfer und Aluminium sind besser als die elektrische Leitfähigkeit von Nickel (siehe Tabelle 1). Ableitelemente aus Kupfer und Aluminium sind deshalb im Rahmen der vorliegenden Erfindung bevorzugt.

Tabelle 1: Elektrische Leitfähigkeiten von Kupfer, Aluminium und Nickel

| **Material** | **Elektrische Leitfähigkeit σ / 20°C** |
|---|---|
| | [S/m] |
| Kupfer | 5,80E+07 |
| Aluminium | 3,70E+07 |
| Nickel | 1,40E+07 |

Experiment 1: Verhalten von Ableitelementen aus Nickel und Kupfer für die negative Elektrode in Test-Vollzellen mit Referenzelektrolyt der Zusammensetzung $LiAlCl_4$* 4,5 $SO_2$

Es wurden negative Elektroden mit Graphit als aktives Material hergestellt. Diese negativen Elektroden enthielten keinen Binder. Das Ableitelement der ersten negativen Elektroden bestand aus Kupfer in Form eines Kupferschaums. Die zweiten negativen Elektroden enthielten ein Nickel-Ableitelement in Form eines Nickelschaums. Nickel ist das Material für Ableitelemente aus dem Stand der Technik, welches bei wiederaufladbaren Batteriezellen mit Elektrolyten der Zusammensetzung $LiAlCl_4$ * x $SO_2$ eingesetzt werden.

Zwei negative Elektroden mit Kupfer-Ableitelementen wurden zusammen mit einer positiven Elektrode, die Lithiumeisenphosphat als aktives Elektrodenmaterial enthielt, zu einer ersten Test-Vollzelle 1 gemäß Beispiel 3 zusammengefügt. Mit den negativen Elektroden, die Nickel-Ableitelemente enthielten, wurde eine zweite Test-Vollzelle 2 gemäß Beispiel 3 aufgebaut. Beide Test-Vollzellen 1 und 2 wurden mit einem Referenzelektrolyten gemäß Beispiel 1 der Zusammensetzung $LiAlCl_4$ * 4,5 $SO_2$ befüllt.

Zunächst wurde im ersten Zyklus die Deckschichtkapazitäten gemäß Beispiel 4 bestimmt. Figur 6 zeigt das Potenzial in Volt der Test-Vollzellen beim Laden der negativen Elektrode als Funktion der Kapazität in [%], die bezogen ist auf die theoretische Kapazität der negativen Elektrode, wobei die durchgezogene Kurve der Test-Vollzelle 1 und die gestrichelte Kurve der Test-Vollzelle 2 entspricht.

Die zwei dargestellten Kurven zeigen gemittelte Ergebnisse jeweils mehrerer Experimente mit den vorstehend beschriebenen Test-Vollzellen 1 und 2. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Die ermittelten Deckschichtkapazitäten [in % der Theorie der Kapazität der negativen Elektrode] liegen aufgrund des fehlenden Binders in der negativen Elektrode bei höheren Werten als z.B. die Deckschichtkapazitäten, die bei binderhaltigen Elektroden ermittelt wurden. Bei der Test-Vollzelle 1 mit einer Graphitelektrode mit Kupferschaum-Ableitelement liegt die Deckschichtkapazität bei 19,8 % und bei der Test-Vollzelle 2 mit der Graphitelektrode mit Nickelschaum-Ableitelement bei 15,5 %.

Zur Ermittlung der Entladekapazitäten (siehe Beispiel 4) wurden die beiden Test-Vollzellen 1 und 2 mit einer Laderate von C/2 bis zu einem oberen Potentialen von 3,8 Volt geladen. Danach erfolgte die Entladung mit einer Entladerate von C/2 bis zu einem Entladepotential von 2,5 Volt.

Figur 7 zeigt Mittelwerte für die Entladekapazitäten der zwei Test-Vollzellen 1 und 2 als Funktion der Zykelzahl, wobei die durchgezogene Kurve der Test-Vollzelle 1 und die gestrichelte Kurve der Test-Vollzelle 2 entspricht. Es wurden 190 Zyklen durchgeführt. Diese Mittelwerte der Entladekapazitäten werden jeweils in Prozent der Nennkapazität [% Nennkapazität] ausgedrückt.

Der Verlauf der Entladekapazitäten der zwei Test-Vollzellen 1 und 2 zeigt einen gleichmäßigen, abnehmenden Verlauf. Die Kapazitätsabnahme ist jedoch deutlich größer bei denjenigen Test-Vollzellen, die Graphitelektroden mit Kupferschaum-Ableitelement enthielten. So liegt die Kapazität bei der Test-Vollzelle 1 (Nickel-Ableitelement) bei Zyklus 190 noch bei 70 %, während die Kapazität der Test-Vollzelle 2 (Kupfer-Ableitelement) bei Zyklus 190 nur noch bei 64 % liegt.

Im Referenzelektrolyten zeigt eine negative Elektrode, die ein Nickel-Ableitelement aufweist, eine geringere Deckschichtkapazität und ein besseres Zykelverhalten, als eine negative Elektrode mit Kupfer-Ableitelement. Damit werden auch die Aussagen von [V3] bestätigt, nachdem Nickel das gebräuchliche Ableitelement in $LiAlCl_4$ * x $SO_2$ Elektrolyten ist.

Experiment 2: Verhalten von Ableitelementen aus Nickel und Kupfer für die negative Elektrode in Test-Vollzellen mit Elektrolyt 1

Wieder wurden negative Elektroden mit Graphit als aktives Material hergestellt. Das Ableitelement der ersten negativen Elektroden bestand aus Kupfer in Form eines porösen Kupferschaums. Die zweiten negativen Elektroden

enthielten ein Nickel-Ableitelement in Form eines porösen Nickelschaum.

Zwei negative Elektroden mit Kupferschaum als Ableitelement wurden zusammen mit einer positiven Elektrode, die Lithiumnickelmangancobaltoxid (NMC 622) als aktives Elektrodenmaterial enthielt, zu einer ersten Test-Vollzelle gemäß Beispiel 3 zusammengefügt. Auch mit den negativen Elektroden, die Nickelschaum als Ableitelement enthielten, wurde eine zweite Test-Vollzelle gemäß Beispiel 3 aufgebaut. Beide Test-Vollzellen wurden mit dem Elektrolyten 1 gemäß Beispiel 2 befüllt.

Zunächst wurde im ersten Zyklus die Deckschichtkapazitäten gemäß Beispiel 4 bestimmt.

Figur 8 zeigt das Potenzial in Volt der beiden Test-Vollzellen beim Laden der negativen Elektrode als Funktion der Kapazität in [%], die bezogen ist auf die theoretische Kapazität der negativen Elektrode. Die zwei dargestellten Kurven zeigen jeweils gemittelte Ergebnisse mehrerer Experimente mit den vorstehend beschriebenen Test-Vollzellen, wobei die durchgezogene Kurve der Test-Vollzelle mit der Graphitelektrode mit Kupfer-Ableitelement und die gestrichelte Kurve der Test-Vollzelle mit der Graphitelektrode mit Nickel-Ableitelement entspricht. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Bei der Test-Vollzelle mit einer Graphitelektrode mit einem Kupfer-Ableitelement liegt die Deckschichtkapazität bei 6,7 % und bei der Test-Vollzelle mit der Graphitelektrode mit einem Nickel-Ableitelement bei 7,3 %. Die Deckschichtkapazität ist bei der Verwendung eines Kupfer-Ableitelements kleiner als bei der Verwendung eines Nickel-Ableitelements.

Zur Ermittlung der Entladekapazitäten (siehe Beispiel 4) wurden die beiden Test-Vollzellen mit einer Laderate von C/2 bis zu einem oberen Potentialen von 4,4 Volt geladen. Danach erfolgte die Entladung mit einer Entladerate von C/2 bis zu einem Entladepotential von 2,5 Volt.

Figur 9 zeigt Mittelwerte für die Entladekapazitäten der zwei Test-Vollzellen als Funktion der Zykelzahl, wobei die durchgezogene Kurve der Test-Vollzelle mit der Graphitelektrode mit Kupfer-Ableitelement und die gestrichelte Kurve der Test-Vollzelle mit der Graphitelektrode mit Nickel-Ableitelement entspricht. Diese Mittelwerte der Entladekapazitäten werden jeweils in Prozent der Nennkapazität [% Nennkapazität] ausgedrückt. Der Verlauf der Entladekapazitäten der zwei Test-Vollzellen zeigt einen gleichmäßigen, fast geraden Verlauf. Es ist nur eine geringe Kapazitätsabnahme bei beiden Test-Vollzellen zu erkennen. So liegen die Kapazitäten bei den beiden Test-Vollzellen bei Zyklus 200 noch bei ca. 95 % (Nickel-Ableitelement) bzw. 94% (Kupfer-Ableitelement).

Figur 10 zeigt eine Fotographie des Kupfer-Ableitelements nach der zuvor beschriebenen Messung aus Figur 9. Aus dieser Figur 10 ist ersichtlich, dass es während des Experiments zu keiner Korrosion am Kupfer-Ableitelement kommt.

Im Elektrolyten 1 zeigen negative Elektroden mit einem Nickelableitelement und negative Elektroden mit einem Kupfer-Ableitelement geringe Deckschichtkapazität und ein gutes Zykelverhalten. Am Kupfer-Ableitelement ist keine Korrosion nach dem Experiment zu erkennen.

<u>Experiment 3:</u> Verhalten von Ableitelementen aus Kupfer für die negative Elektrode in Halbzellen mit Elektrolyt 5 und Elektrolyt 6

Wieder wurden negative Elektroden mit Graphit als aktives Material hergestellt. Das Ableitelement der Elektroden bestand aus Kupfer in Form einer Kupferfolie.

Die Experimente wurden in Halbzellen mit metallischem Lithium als Gegen- und Bezugselektrode durchgeführt. Die Arbeitselektrode war die zu untersuchende Graphitelektrode mit Kupfer-Ableitelement. Die Halbzellen wurden zum einen mit dem Elektrolyt 5 und zum anderen mit dem Elektrolyt 6 befüllt. Die Halbzellen wurde mit einer Lade-/ Entlade-Rate von 0,02C bis zu einem Potential von 0,03 Volt geladen und bis zu einem Potential von 0,5 Volt entladen. Figur 11 zeigt die Potentiale der jeweiligen Ladekurven und Entladekurven für den vierten Zyklus im Elektrolyten 5 und den zweiten Zyklus im Elektrolyten 6 der Halbzellen, wobei die durchgezogenen Kurven der Potentiale der Ladekurven und die gestrichelten Kurven der Potentiale der Entladekurven entspricht. Die Lade- und Entladekurven zeigen ein stabiles, batterietypisches Verhalten. Kupfer-Ableitelemente sind als Ableitelemente der negativen Elektrode in den Elektrolyten 5 und 6 geeignet und zeigen ein stabiles Verhalten.

<u>Experiment 4:</u> Verhalten von Ableitelementen aus Aluminium in Halbzellenexperimenten mit Referenzelektrolyt und mit erfindungsgemäßem Elektrolyt 1

Mit diesen Experimenten soll die Langzeitstabilität von Aluminium-Ableitelementen unter Strombelastung im Referenzelektrolyt und im Elektrolyt 1 untersucht werden. Die Experimente wurden in Halbzellen mit metallischem Lithium als Gegen- und Bezugselektrode durchgeführt. Die Arbeitselektroden waren jeweils das zu untersuchende Aluminium-Ableitelement in Form eines Aluminiumblechs. Die Halbzellen wurde zum einen mit einem Referenzelektrolyten der

Zusammensetzung $LiAlCl_4 \times 1{,}5\ SO_2$ und zum anderen mit dem Elektrolyt 1 befüllt.

Bei der Halbzelle mit Aluminium-Ableitelement in Referenzelektrolyt wurde ein konstanter Strom von 0,1 mA für die Zeit von ca. 300 Stunden angelegt. Die gestrichelten Linien in Figur 12 zeigen die Stromstärke mit der entsprechenden Skala auf der rechten Seite des Diagramms und das sich einstellende Potential (Skala auf der linken Seite) über eine Zeit von 90 Stunden. Über die gesamte Zeit war ein Potential von ca. 3,9 Volt zu beobachten. Nach dem Experiment wurde das Aluminium-Ableitelement aus der Halbzelle entfernt und untersucht.

Auch bei der Halbzelle mit Aluminium-Ableitelement in Elektrolyt 1 wurde zunächst ein konstanter Strom von 0,1 mA angelegt. Das Zielpotential des Versuchs von 5,0 V wurde bereits nach ca. 2 min erreicht. Hiernach wurde der Strom auf 0,5 $\mu$A reduziert und sukzessive auf die Stromstärken 1 $\mu$A, 2 $\mu$A, 3 $\mu$A, 4 $\mu$A ,6 $\mu$A, 8 $\mu$A, 10 $\mu$A und 12 $\mu$A alle 10h erhöht. Die durchgezogenen Linien in Figur 12 zeigt die Stromstärke mit der entsprechenden Skala auf der rechten Seite des Diagramms und das sich einstellenden Potential (Skala auf der linken Seite) über eine Zeit von 90 Stunden. Nach dem Experiment wurde auch hier das Aluminium-Ableitelement aus der Halbzelle entfernt und untersucht.

Figur 13 zeigt beispielhaft ein Aluminium-Ableitelement, welches zu Beginn der Messungen in die jeweilige Halbzelle eingebracht wurde. In Figur 14 ist das Aluminium-Ableitelement nach dem Experiment in der Halbzelle mit Referenzelektrolyt zu sehen. Es ist eine deutliche Korrosion an den Rändern und der Oberfläche des Aluminiumblechs nach dem Experiment in der Halbzelle mit Referenzelektrolyt zu sehen. Diese Korrosion spiegelt sich auch in einem sehr großen Gewichtsverlust von 61,5% des Aluminium-Ableitelements wider. Aluminium ist im Referenzelektrolyten bei Strombelastung nicht stabil. In Figur 15 ist das Aluminium-Ableitelement nach dem Experiment in der Halbzelle mit Elektrolyt 1 zu sehen. Es ist kein Unterschied am Aluminiumblech im Vergleich zum Beginn der Messung zu sehen, d.h. es ist keine Korrosion am Ableitelement festzustellen. Aluminium ist im erfindungsgemäßen Elektrolyten 1 bei Strombelastung sehr stabil.

Experiment 5: Verhalten von Ableitelementen aus Aluminium für die positive Elektrode in Test-Vollzellen und Halbzellen mit dem Elektrolyt 1

Zur weiteren Untersuchung der Ableitelemente aus Aluminium wurden diese mit einem aktiven, positiven Material beschichtet. Es wurden positive Elektroden mit $LiNi_{0.5}Mn_{1.5}O_4$ (LNMO) als aktives Material hergestellt. LNMO ist ein aktives Material, das bis zu einem hohen oberen Potential von beispielsweise 5 Volt ladbar ist. Das Ableitelement der Elektroden bestand aus Aluminium in Form eines Aluminiumblechs. Mit einer positiven Elektrode wurde eine Halbzelle mit einer Lithium-Elektrode als Gegenelektrode und als Bezugselektrode aufgebaut. Die Halbzelle wurde mit dem Elektrolyt 1 befüllt. Zur Ermittlung der Entladekapazitäten (siehe Beispiel 4) wurden die Halbzellen mit einer Lade-/ Entlade-Rate von 0,1C bis zu einem Potential von 5 Volt geladen bzw. entladen.

Figur 16 zeigt die Potentiale der Ladekurven (durchgezogene Linie) und Entladekurven (gestrichelte Linie) für den ersten Zyklus der Halbzelle mit Aluminium-Ableitelement als Funktion der Kapazität.

Die Lade- und Entladekurven zeigen ein stabiles, batterietypisches Verhalten. Aluminium-Ableitelemente sind als Ableitelemente der positiven Elektrode in dem Elektrolyt 1 sehr stabil.

Experiment 6: Verhalten von Ableitelementen aus Aluminium für die positive Elektrode in Test-Vollzellen mit dem Elektrolyt 1

Um die Stabilität von Aluminium-Ableitelementen weiter zu testen, wurde eine Test-Vollzelle mit einer positiven Elektrode, die Nickelmangancobaltoxid (NMC622) als aktives Material und eine Aluminiumfolie als Ableitelement enthielt, und zwei negativen Elektroden aufgebaut. Die negativen Elektroden enthielten Graphit als aktives Material und ein Nickel-Ableitelement. Zur Ermittlung der Entladekapazitäten (siehe Beispiel 4) wurde die Test-Vollzelle mit einer Laderate von 0,1 C bis zu einem oberen Potential von 4,4 Volt geladen. Danach erfolgte die Entladung mit einer Entladerate von 0,1 C bis zu einem Entladepotential von 2,8 Volt. Figur 17 zeigt den Verlauf der Entladekapazität über 200 Zyklen. Die Test-Vollzelle zeigt ein sehr stabiles Verhalten mit einem nahezu waagrechten Kapazitätsverlauf. Damit kann bestätigt werden, dass Aluminium-Ableitelemente als Ableitelemente der positiven Elektrode in dem Elektrolyt 1 sehr stabil sind.

Experiment 7: Verhalten von Ableitelementen aus Aluminium für die positive Elektrode in Kombination mit Ableitelementen aus Kupfer für die negative Elektrode in Vollzellen mit Elektrolyt 1

Um das Verhalten von Ableitelementen aus Aluminium für die positive Elektrode in Kombination mit Ableitelementen aus Kupfer für die negative Elektrode in Vollzellen mit erfindungsgemäßen Elektrolyt 1 zu testen, wurden eine Vollzelle mit 24 negativen und 23 positiven Elektroden aufgebaut. Die positiven Elektroden enthielten Nickelmangancobaltoxid (NMC622) als aktives Material und eine Aluminiumfolie als Ableitelement. Die negativen Elektroden enthielten Graphit als aktives Material und eine Kupferfolie als Ableitelement.

Zur Ermittlung der Entladekapazitäten (siehe Beispiel 4) wurde die Vollzelle mit einer Laderate von 0,1 C bis zu

verschiedenen oberen Potentialen von 4,3 V bzw. 4,6 V geladen. Die Ladekapazität wurde auf 50% der theoretischen Zellkapazität begrenzt. Danach erfolgte die Entladung mit einer Entladerate von 0,1 C bis zu einem Entladepotential von 2,8 Volt. Figur 18 zeigt den Verlauf der Entladekapazitäten normiert auf die max. Kapazität der Vollzellen mit einem oberen Potential von 4,3 V und der Vollzellen mit einem oberen Potential von 4,6 V über 10 Zyklen. Die Vollzellen zeigen ein sehr stabiles Verhalten mit einem nahezu waagrechten Kapazitätsverlauf, auch bei der Messung mit einem höheren oberen Potential. Damit kann bestätigt werden, dass Aluminium-Ableitelemente für die positiven Elektrode in Kombination mit Ableitelementen aus Kupfer für die negative Elektrode in Vollzellen mit dem Elektrolyt 1 sehr stabil sind.

Experiment 8: Verhalten von Ableitelementen aus Aluminium für die positive Elektrode in Halbzellen mit dem Elektrolyt 5

Es wurden positive Elektroden mit Nickelmangancobaltoxid (NMC811) als aktives Material hergestellt. Das Ableitelement der positiven Elektroden bestand aus Aluminium in Form einer Aluminiumfolie. Die Experimente wurden in Halbzellen mit metallischem Lithium als Gegen- und Bezugselektrode durchgeführt. Die Arbeitselektrode war die zu untersuchende positive Elektrode mit Aluminium-Ableitelement. Die Halbzelle wurde mit dem Elektrolyt 5 befüllt. Zur Ermittlung der Entladekapazitäten (siehe Beispiel 4) wurden die Halbzellen mit einer Lade-/ Entlade-Rate von 0,02 C bis zu einem Potential von 3,9 Volt geladen und bis zu einem Potential von 3 Volt entladen.

Figur 19 zeigt das Potential beim Laden und für den zweiten Zyklus der Halbzelle mit Aluminiumableitelement als Funktion der Kapazität.

Die Lade- und Entladekurven zeigen ein stabiles, batterietypisches Verhalten. Aluminium-Ableitelemente sind als Ableitelemente der positiven Elektrode in dem Elektrolyt 5 sehr stabil.

Experiment 8: Untersuchung der Elektrolyte 1, 3, 4 und 5

Zur Untersuchung der Elektrolyte 1, 3, 4 und 5 wurden verschiedene Experimente durchgeführt. Zum einen wurden die Deckschichtkapazitäten der Elektrolyte 1 und 3 und des Referenzelektrolyten ermittelt und zum anderen die Entladekapazitäten in den Elektrolyten 1, 3, 4 und 5 bestimmt.

Zur Ermittlung der Deckschichtkapazität wurden drei Test-Vollen mit den in Beispiel 2 beschriebenen Elektrolyten 1 und 3 und dem in Beispiel 1 beschriebenen Referenzelektrolyten befüllt. Die drei Test-Vollzellen enthielten Lithiumeisenphosphat als Aktivmaterial der positiven Elektrode.

Figur 20 zeigt das Potenzial in Volt der Test-Vollzellen beim Laden der negativen Elektrode als Funktion der Kapazität, die bezogen ist auf die theoretische Kapazität der negativen Elektrode. Die zwei dargestellten Kurven zeigen gemittelte Ergebnisse jeweils mehrerer Experimente mit den vorstehend beschriebenen Test-Vollzellen. Zunächst wurden die Test-Vollzellen mit einem Strom von 15 mA geladen, bis eine Kapazität von 125 mAh ($Q_{lad}$) erreicht war. Danach erfolgte die Entladung der Test-Vollzellen mit 15 mA bis zum Erreichen eines Potentials von 2,5 Volt. Dabei erfolgte die Ermittlung der Entladekapazität ($Q_{ent}$).

Die absoluten Kapazitätsverluste liegen bei 7,58 % bzw. 11,51 % für die Elektrolyte 1 und 3 und bei 6,85 % für den Referenzelektrolyten. Die Kapazität für die Deckschichtbildung ist bei beiden erfindungsgemäßen Elektrolyten etwas höher als beim Referenzelektrolyten. Werte im Bereich von 7,5 % - 11,5 % für die absoluten Kapazitätsverluste sind gute Ergebnisse in Kombination mit der Möglichkeit Hochvoltkathoden bis 5 Volt einzusetzen. Für die Entladeexperimente wurden vier Test-Vollzellen gemäß Beispiel 3 mit den in Beispiel 2 beschriebenen Elektrolyten 1, 3, 4 und 5 befüllt. Die Test-Vollzellen hatten Lithiumnickelmangancobaltoxid (NMC) als aktives Material der positiven Elektrode. Zur Ermittlung der Entladekapazitäten (siehe Beispiel 4) wurden die Test-Vollzellen mit Stromstärke von 15 mA bis zu einer Kapazität von 125 mAh geladen. Danach erfolgte die Entladung mit einer Stromstärke von 15 mA bis zu einem Entladepotential von 2,5 Volt.

Figur 21 zeigt den Potentialverlauf während der Entladung über der entladenen Ladungsmenge in % [% der maximalen Ladung (Entladung)]. Alle Test-Vollzellen zeigen eine flache Entladekurve, die für einen guten Betrieb einer Batteriezelle notwendig ist.

Experiment 9: Bestimmung von Leitfähigkeiten der Elektrolyte 1, 3, 4, 5 und 6

Zur Bestimmung der Leitfähigkeit wurden die Elektrolyte 1, 3, 4, 5 und 6 mit verschiedenen Konzentrationen der Verbindungen 1, 3, 4, 5 und 6 hergestellt. Für jede Konzentration der verschiedenen Verbindungen wurden die Leitfähigkeiten der Elektrolyte bestimmt, indem ein konduktives Messverfahren verwendet wurde. Dabei wurde nach Temperierung ein Vierelektrodensensor berührend in die Lösung gehalten und in einem Messbereich von 0,02 - 500 mS/cm gemessen.

Figur 22 zeigt die Leitfähigkeiten der Elektrolyte 1, 4 und 6 in Abhängigkeit der Konzentration der Verbindungen 1, 4 und 6. Bei Elektrolyt 1 ist ein Maximum der Leitfähigkeit bei einer Konzentration der Verbindung 1 von 0,6 mol/L - 0,7

mol/L mit einem Wert von ca. 37,9 mS/cm zu sehen. Im Vergleich dazu haben die aus dem Stand der Technik bekannten, organischen Elektrolyte, wie z.B. LP30 (1 M LiPF6 / EC-DMC (1:1 Gew.)) eine Leitfähigkeit von nur ca. 10 mS/cm. Bei Elektrolyt 4 werden maximal 18 mS/cm bei einer Leitsalzkonzentration von 1 mol/L erreicht. Elektrolyt 6 zeigt ein Maximum von 11 mS/cm bei einer Leitsalzkonzentration von 0,6 mol/L.

Die Figur 23 zeigt die Leitfähigkeiten der Elektrolyte 3 und 5 in Abhängigkeit der Konzentration der Verbindungen 3 und 5. Bei Elektrolyt 5 werden maximal 1,3 mS/cm bei einer Leitsalzkonzentration von 0,8 mol/L erreicht. Elektrolyt 3 zeigt seine höchste Leitfähigkeit von 0,5 mS/cm bei einer Leitsalzkonzentration von 0,6 mol/L. Obwohl die Elektrolyte 3 und 5 geringere Leitfähigkeiten zeigen, ist eine Ladung bzw. Entladung einer Test-Halbzelle, wie z.B. in dem Experiment 3 beschrieben oder einer Test-Vollzelle wie in dem Experiment 8 beschrieben, gut möglich.

Experiment 10: Tieftemperaturverhalten

Um das Tieftemperaturverhalten des Elektrolyten 1 im Vergleich zum Referenzelektrolyten zu bestimmen, wurden zwei Test-Vollzellen, gemäß Beispiel 3 hergestellt. Eine Test-Vollzelle wurde mit Referenzelektrolyt der Zusammensetzung $LiAlCl_4*6SO_2$ und die andere Test-Vollzelle mit Elektrolyt 1 befüllt. Die Test-Vollzelle mit dem Referenzelektrolyt enthielt Lithiumeisenphosphat (LEP) als aktives Material, die Testzelle mit Elektrolyt 1 enthielt Lithiumnickelmangancobaltoxid (NMC) als aktives Material der positiven Elektrode. Die Test-Vollzellen wurden bei 20°C bis 3,6 Volt (LEP) bzw. 4,4 Volt (NMC) geladen und bei der jeweiligen zu untersuchenden Temperatur bis 2,5 Volt wieder entladen. Die bei 20°C erreichte Entladekapazität wurde mit 100% bewertet. Die Temperatur zur Entladung wurde in Temperaturschritten von 10°K erniedrigt. Die erhaltene Entladekapazität wurde in % der Entladekapazität bei 20°C beschrieben. Da die Tieftemperaturentladungen nahezu unabhängig von den verwendeten aktiven Materialien der positiven und negativen Elektrode sind, können die Ergebnisse auf alle Kombinationen von aktiven Materialien übertragen werden. Tabelle 5 zeigt die Ergebnisse.

Die Test-Vollzelle mit dem Elektrolyt 1 zeigt ein sehr gutes Tieftemperaturverhalten. Bei - 20°C werden noch 82% der Kapazität erreicht, bei - 30°C noch 73%. Selbst bei einer Temperatur von -40 °C können noch 61% der Kapazität entladen werden. Im Gegensatz dazu zeigt die Test-Vollzelle mit dem Referenzelektrolyten nur eine Entladefähigkeit bis - 10°C. Dabei wird eine Kapazität von 21% erreicht. Bei tieferen Temperaturen kann die Zelle mit dem Referenzelektrolyten nicht mehr entladen werden.

Tabelle 5: Entladekapazitäten in Abhängigkeit der Temperatur

| Temperatur | Entladekapazität des Elektrolyts 1 | Entladekapazität des Referenzelektrolyt |
|---|---|---|
| 20°C | 100% | 100% |
| 10°C | 99% | 99% |
| 0°C | 95% | 46% |
| -10°C | 89% | 21% |
| -20°C | 82% | n/a |
| -30°C | 73% | n/a |
| -35°C | 68% | n/a |
| -40°C | 61% | n/a |

## Patentansprüche

**1.** Wiederaufladbare Batteriezelle (2, 20, 40), enthaltend ein aktives Metall, zumindest eine positive Elektrode (4, 23, 44) mit einem Ableitelement (26), zumindest eine negative Elektrode (5, 22, 45) mit einem Ableitelement (27), ein Gehäuse (1, 28) und einen Elektrolyten,

wobei das Ableitelement (26) der positiven Elektrode (4, 23, 40) und das Ableitelement (27) der negativen Elektrode (5, 22, 45) unabhängig voneinander aus einem Material ausgebildet sind, das ausgewählt ist aus der Gruppe, die gebildet wird von Aluminium und Kupfer,
und wobei der Elektrolyt auf $SO_2$ basiert und zumindest ein erstes Leitsalz enthält, welches die Formel (I)

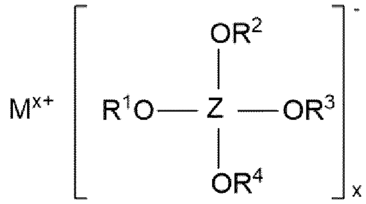

Formel (I)

aufweist, wobei

- M ein Metall ist, das ausgewählt ist aus der Gruppe, die gebildet wird von Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe, die gebildet wird von $C_1$-$C_{10}$ Alkyl, $C_2$-$C_{10}$ Alkenyl, $C_2$-$C_{40}$ Alkinyl, $C_3$-$C_{10}$ Cycloalkyl, $C_6$-$C_{14}$ Aryl und $C_5$-$C_{14}$ Heteroaryl; wobei
- optional mindestens zwei der Substituenten $R^1$, $R^2$, $R^3$ und $R^4$ zur Ausbildung eines Chelatliganden untereinander verbrückt sind; und
- optional zumindest einer der Substituenten $R^1$, $R^2$, $R^3$ und R durch mindestens ein Fluoratom und/oder durch mindestens eine chemische Gruppe substituiert ist, wobei die chemische Gruppe ausgewählt ist aus der Gruppe, die gebildet wird von $C_1$-$C_4$-Alkyl, $C_2$-$C_4$-Alkenyl, $C_2$-$C_4$-Alkinyl, Phenyl und Benzyl;
wobei Z Aluminium oder Bor ist.

**2.** Wiederaufladbare Batteriezelle (2, 20, 40) nach Anspruch 1, bei welcher das Ableitelement (26) der positiven Elektrode (4, 23, 44) aus Aluminium ausgebildet ist.

**3.** Wiederaufladbare Batteriezelle (2, 20, 40) nach Anspruch 1 oder 2, bei welcher das Ableitelement (27) der negativen Elektrode (5, 22, 45) aus Kupfer ausgebildet ist.

**4.** Wiederaufladbare Batteriezelle (2, 20, 40) nach einem der vorhergehenden Ansprüche,

bei welcher das Ableitelement (26) der positiven Elektrode (4, 23, 44) und/oder das Ableitelement (27) der negativen Elektrode (5, 22, 45)

- entweder planar in Form eines Metallblechs, einer Metallfolie, vorzugsweise mit eine durchbrochenen bzw. netzartigen Struktur, oder einer mit Metall beschichteten Kunststofffolie,
oder
- dreidimensional in Form einer porösen Metallstruktur, insbesondere in Form eines Metallschaums (18)

ausgebildet ist.

**5.** Wiederaufladbare Batteriezelle (2, 20, 40) nach einem der vorhergehenden Ansprüche,
bei welcher der Elektrolyt oxidationsstabil ist mindestens bis zu einem oberen Potential von 4,0 Volt, bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt.

**6.** Wiederaufladbare Batteriezelle (2, 20, 40) nach einem der vorhergehenden Ansprüche,
bei welcher die Substituenten $R^1$, $R^2$, $R^3$ und $R^4$ des ersten Leitsalzes unabhängig voneinander ausgewählt sind aus der Gruppe, die gebildet wird von

- $C_1$-$C_6$ Alkyl; bevorzugt von $C_2$-$C_4$ Alkyl; besonders bevorzugt von den Alkylgruppen 2-Propyl, Methyl und Ethyl;
- $C_2$-$C_6$ Alkenyl; bevorzugt von $C_2$-$C_4$ Alkenyl; besonders bevorzugt von den Alkenylgruppen Ethenyl und Propenyl;
- $C_2$-$C_6$-Alkinyl; bevorzugt von $C_2$-$C_4$-Alkinyl;

- $C_3$-$C_6$ Cycloalkyl;
- Phenyl; und
- $C_5$-$C_7$ Heteroaryl.

**7.** Wiederaufladbare Batteriezelle (2, 20, 40) nach einem der vorhergehenden Ansprüche, bei welchem zumindest einer der Substituenten $R^1$, $R^2$, $R^3$ und $R^4$ des ersten Leitsalzes eine $CF_3$-Gruppe ist.

**8.** Wiederaufladbare Batteriezelle (2, 20, 40) nach einem der Ansprüche 1 bis 6, bei welcher das erste Leitsalz ausgewählt ist aus der Gruppe, die gebildet wird von

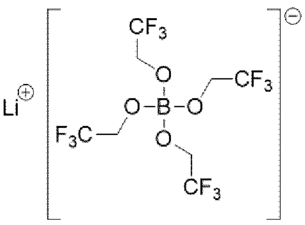

$Li[B(OCH_2CF_3)_4]$

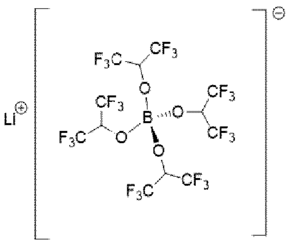

$Li[B(OCH(CF_3)_2)_4]$

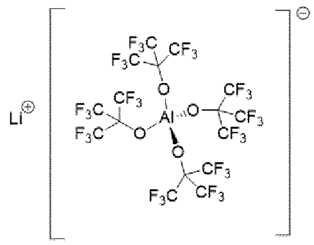

$Li[Al(OC(CF_3)_3)_4]$

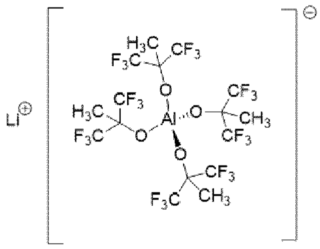

$Li[Al(OC(CH_3)(CF_3)_2)_4]$

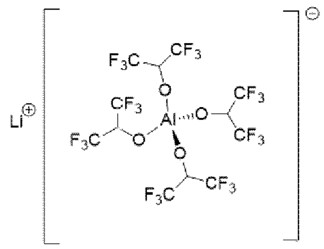

$Li[Al(OCH(CF_3)_2)_4]$

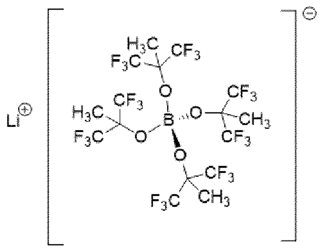

$Li\ [B(OC(CH_3)(CF_3)_2)_4]$

**9.** Wiederaufladbare Batteriezelle (2, 20, 40) nach einem der Ansprüche 1 bis 6, bei welcher das erste Leitsalz die folgende Formel

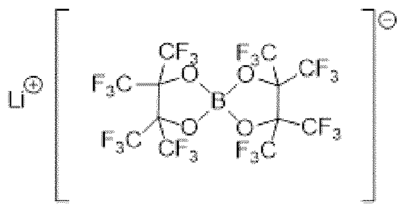

$LiB(O_2C_2(CF_3)_4)_2$

aufweist.

**10.** Wiederaufladbare Batteriezelle (2, 20, 40) nach einem der vorhergehenden Ansprüche, wobei der Elektrolyt mindestens ein zweites, von dem ersten Leitsalz nach Formel (I) abweichendes Leitsalz enthält.

**11.** Wiederaufladbare Batteriezelle (2, 20, 40) nach Anspruch 10, bei welcher das zweite Leitsalz des Elektrolyten eine Alkalimetallverbindung, insbesondere eine Lithiumverbindung ist, die ausgewählt ist aus der Gruppe, die gebildet wird von einem Aluminat, insbesondere Lithiumtetrahalogenoaluminat, einem Halogenid, einem Oxalat, einem Borat, einem Phosphat, einem Arsenat und einem Gallat.

**12.** Wiederaufladbare Batteriezelle (2, 20, 40) nach einem der vorhergehenden Ansprüche, bei welcher der Elektrolyt mindestens ein Additiv enthält.

**13.** Wiederaufladbare Batteriezelle (2, 20, 40) nach Anspruch 12,

bei welcher das Additiv des Elektrolyten ausgewählt ist aus der Gruppe, die gebildet wird von Vinylencarbonat und seinen Derivaten, Vinylethylencarbonat und seinen Derivaten, Methylethylencarbonat und seinen Derivaten, Lithium(bisoxalato)borat, Lithiumdifluoro(oxalato)borat, Lithiumtetrafluoro(oxalato)phosphat, Lithiumoxalat, 2-Vinylpyridin, 4-Vinylpyridin, cyclischen Exomethylencarbonate, Sulfonen, cyclischen und acyclischen Sulfonaten, acyclischen Sulfiten, cyclischen und acyclischen Sulfinaten, organischen Estern, anorganischen Säuren, acyclischen und cyclischen Alkanen, welche acyclischen und cyclischen Alkane einen Siedepunkt bei 1 bar von mindestens 36 ° C aufweisen, aromatischen Verbindungen, halogenierten cyclischen und acyclischen Sulfonylimiden, halogenierten cyclischen und acyclischen Phosphatestern, halogenierten cyclischen und acyclischen Phosphinen, halogenierten cyclischen und acyclischen Phosphiten, halogenierten cyclischen und acyclischen Phosphazenen, halogenierten cyclischen und acyclischen Silylaminen, halogenierten cyclischen und acyclischen halogenierten Estern, halogenierten cyclischen und acyclischen Amiden, halogenierten cyclischen und acyclischen Anhydriden und halogenierten organischen Heterocyclen.

**14.** Wiederaufladbare Batteriezelle (2, 20, 40) nach einem der vorhergehenden Ansprüche,

bei welcher der Elektrolyt die Zusammensetzung

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs,

bezogen auf das Gesamtgewicht der Elektrolytzusammensetzung aufweist.

**15.** Wiederaufladbare Batteriezelle (2, 20, 40) nach einem der vorhergehenden Ansprüche,
bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**16.** Wiederaufladbare Batteriezelle (2, 20, 40) nach einem der vorhergehenden Ansprüche,
bei welcher der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

**17.** Wiederaufladbare Batteriezelle (2, 20, 40) nach einem der vorhergehenden Ansprüche,
bei welcher das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium

ist.

**18.** Wiederaufladbare Batteriezelle (2, 20, 40) nach einem der vorhergehenden Ansprüche,
bei welcher die positive Elektrode (4, 23, 44) als aktives Material zumindest eine Verbindung enthält, die vorzugsweise die Zusammensetzung $A_xM'_yM''_zO_a$ aufweist, worin

- A mindestens ein Metall ist, das ausgewählt ist aus der Gruppe, die gebildet wird von den Alkalimetallen, den Erdalkalimetallen, den Metallen der Gruppe 12 des Periodensystems oder Aluminium;
- M' mindestens ein Metall ist, das ausgewählt ist aus der Gruppe, die gebildet wird von den Elementen Ti, V, Cr, Mn, Fe, Co, Ni, Cu und Zn;
- M" mindestens ein Element ist, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist.

**19.** Wiederaufladbare Batteriezelle (2, 20, 40) nach Anspruch 18, bei welcher die Verbindung die Zusammensetzung $Li_xNi_{y1}Mn_{y2}Co_zO_a$ aufweist, worin x, y1 und y2 unabhängig voneinander Zahlen größer 0 sind, z eine Zahl größer oder gleich 0 ist und a eine Zahl größer 0 ist.

**20.** Wiederaufladbare Batteriezelle (2, 20, 40) nach Anspruch 18, bei welcher die Verbindung die Zusammensetzung $A_xM'_yM''^1,M''^2_{z2}O_4$ aufweist, worin

- $M''^1$ ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- $M''^2$ das Element Phosphor ist;
- x und y unabhängig voneinander Zahlen größer 0 sind;
- z1 eine Zahl größer 0 ist; und
- z2 den Wert 1 aufweist.

**21.** Wiederaufladbare Batteriezelle (2, 20, 40) nach einem der vorhergehenden Ansprüche, bei welcher die positive Elektrode (4, 23, 44) zumindest eine Metallverbindung enthält, die ausgewählt ist aus der Gruppe, die gebildet wird von einem Metalloxid, einem Metallhalogenid und einem Metallphosphat, wobei das Metall der Metallverbindung vorzugsweise ein Übergangsmetall der Ordnungszahlen 22 bis 28 des Periodensystems der Elemente, insbesondere Cobalt, Nickel, Mangan oder Eisen ist.

**22.** Wiederaufladbare Batteriezelle (2, 20, 40) nach einem der vorhergehenden Ansprüche, bei welcher die positive Elektrode (4, 23, 44) zumindest eine Metallverbindung enthält, die die chemische Struktur eines Spinells, eines Schichtoxids, einer Umwandlungsverbindung oder einer polyanionischen Verbindung hat.

**23.** Wiederaufladbare Batteriezelle (2, 20, 40) nach einem der vorhergehenden Ansprüche, bei welcher die negative Elektrode (5, 22, 45) eine Insertionselektrode ist, die vorzugsweise Kohlenstoff als aktives Material, insbesondere in der Modifikation Graphit enthält.

**24.** Wiederaufladbare Batteriezelle (2, 20, 40) nach einem der vorhergehenden Ansprüche,

bei welcher die positive Elektrode (4, 23, 44) und/oder die negative Elektrode (5, 22, 45) zumindest ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, oder
ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist, oder
ein Bindemittel, welches aus einem Polymer besteht, das auf monomeren Styrol- und Butadien-Struktureinheiten basiert, oder ein Bindemittel aus der Gruppe der Carboxymethylcellulosen enthält,
wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode oder der negativen Elektrode vorliegt.

**25.** Wiederaufladbare Batteriezelle (2, 20, 40) nach einem der vorhergehenden Ansprüche, welche mehrere negativen Elektroden (5, 22, 45) und zumindest eine, vorzugsweise mehrere positive Elektroden (4, 23, 44) umfasst, die alternierend gestapelt in dem Gehäuse (1, 28) angeordnet sind, wobei die positiven Elektroden (4, 23, 44) und die negativen Elektroden (5, 22, 45) vorzugsweise jeweils durch Separatoren (11, 21, 13) voneinander elektrisch getrennt sind.

## Claims

**1.** Rechargeable battery cell (2, 20, 40) containing an active metal, at least one positive electrode (4, 23, 44) with a discharge element (26), at least one negative electrode (5, 22, 45) with a discharge element (27), a housing (1, 28) and an electrolyte,

wherein the discharge element (26) of the positive electrode (4, 23, 40) and the discharge element (27) of the negative electrode (5, 22, 45) are formed independently from each other from a material selected from the group

formed by aluminum and copper,
and wherein the electrolyte is based on SO2 and contains at least a first conducting salt which has the formula (I),

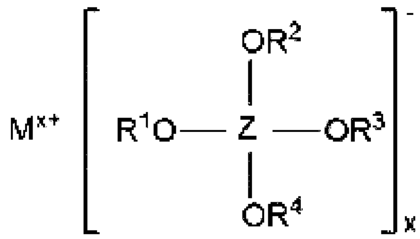

Formula (I)

wherein

- M is a metal which is selected from the group which is formed by alkali metals, earth alkali metals, metals from group 12 of the periodic table of the elements and aluminum;
- x is an integer from 1 to 3;
- the substituents $R^1$, $R^2$, $R^3$ and $R^4$ are selected independently from each other from the group formed by $C_1$-$C_{10}$ alkyl, $C_2$-$C_{10}$ alkenyl, $C_2$-$C_{10}$ alkynyl, $C_3$-$C_{10}$ cycloalkyl,$C_6$-$C_{14}$ aryl and$C_5$-$C_{14}$ heteroaryl; wherein
- optionally at least two of the substituents $R^1$, $R^2$, $R^3$ and R4 are bridged to each other to form a chelate ligand; and
- optionally at least one of the substituents $R^1$, $R^2$, $R^3$ and R is substituted by at least one fluorine atom and/or by at least one chemical group, wherein the chemical group is selected from the group formed by $C_1$-$C_4$alkyl, $C_2$-$C_4$alkenyl, $C_2$-$C_4$alkynyl, phenyl and benzyl;

wherein Z is aluminum or boron.

**2.** Rechargeable battery cell (2, 20, 40) according to claim 1, in which the discharge element (26) of the positive electrode (4, 23, 44) is made of aluminum.

**3.** Rechargeable battery cell (2, 20, 40) according to claim 1 or 2, in which the discharge element (27) of the negative electrode (5, 22, 45) is made of copper.

**4.** Rechargeable battery cell (2, 20, 40) according to any one of the preceding claims,
in which the discharge element (26) of the positive electrode (4, 23, 44) and/or the discharge element (27) of the negative electrode (5, 22, 45) is formed

- either to be planar in the form of a metal sheet, a metal foil, preferably with a perforated or net-like structure, or a metal-coated plastic foil, or
- three-dimensional in the form of a porous metal structure, in particular in the form of a metal foam (18).

**5.** Rechargeable battery cell (2, 20, 40) according to any one of the preceding claims,
in which the electrolyte is oxidation stable at least up to an upper potential of 4.0 Volt, preferably at least up to an upper potential of 4.2 Volt, further preferably at least up to an upper potential of 4.4 Volt, further preferably at least up to an upper potential of 4.6 Volt, further preferably at least up to an upper potential of 4.8 Volt and most preferably at least up to an upper potential of 5.0 Volt.

**6.** Rechargeable battery cell (2, 20, 40) according to any one of the preceding claims,
in which the substituents $R^1$, $R^2$, $R^3$ and $R^4$ of the first conducting salt are selected independently of each other from the group formed by

- $C_1$-$C_6$ alkyl; preferably $C_2$-$C_4$ alkyl; most preferably the alkyl groups 2-propyl, methyl and ethyl;
- $C_2$-$C_6$ alkenyl; preferably $C_2$-$C_4$ alkenyl; most preferably the alkenyl groups ethenyl and propenyl;
- $C_2$-$C_6$alkynyl; preferably $C_2$-$C_4$alkynyl;
- $C_3$-$C_6$ cycloalkyl;
- phenyl; and

- $C_5$-$C_7$ heteroaryl.

**7.** Rechargeable battery cell (2, 20, 40) according to any one of the preceding claims, wherein at least one of the substituents $R^1$, $R^2$, $R^3$ and $R^4$ of the first conducting salt is a $CF_3$group.

**8.** Rechargeable battery cell (2, 20, 40) according to any one of claims 1 to 6, in which the first conducting salt is selected from the group formed by

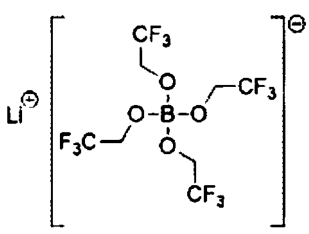

$Li[B(OCH_2CF_3)_4]$

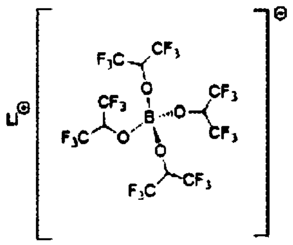

$Li[B(OCH(CF_3)_2)_4]$

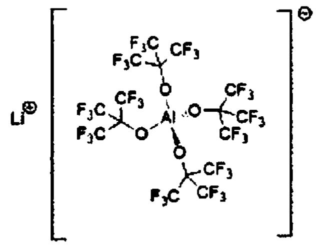

$Li[Al(OC(CF_3)_3)_4]$

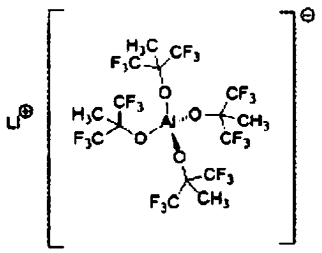

$Li[Al(OC(CH_3)(CF_3)_2)_4]$

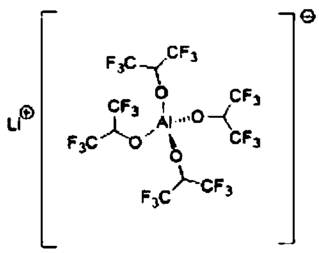

$Li[Al(OCH(CF_3)_2)_4]$

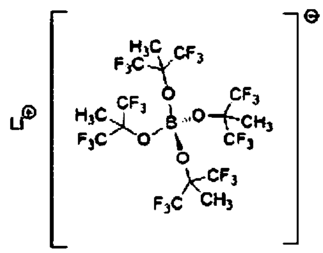

$Li [B(OC(CH_3)(CF_3)_2)_4]$

**9.** Rechargeable battery cell (2, 20, 40) according to any one of claims 1 to 6, in which the first conducting salt has the following formula

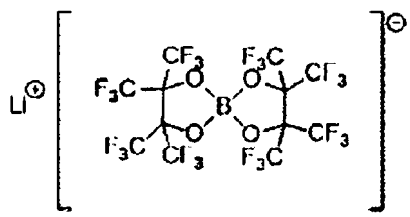

$LiB(O_2C_2(CF_3)_4)_2$

**10.** Rechargeable battery cell (2, 20, 40) according to any one of the preceding claims, wherein the electrolyte contains at least one second conducting salt differing from the first conducting salt according to formula (I).

**11.** Rechargeable battery cell (2, 20, 40) according to claim 10, in which the second conducting salt of the electrolyte is an alkali metal compound, in particular a lithium compound, selected from the group formed by an aluminate, in particular lithium tetrahalogenoaluminate, a halide, an oxalate, a borate, a phosphate, an arsenate and a gallate.

**12.** Rechargeable battery cell (2, 20, 40) according to any one of the preceding claims, in which the electrolyte contains at least one additive.

**13.** Rechargeable battery cell (2, 20, 40) according to claim 12, in which the additive of the electrolyte is selected from the group formed from vinylene carbonate and its derivatives, vinylethylene carbonate and its derivatives, methylethylene carbonate and its derivatives, lithium(bisoxalato)borate, lithium difluoro(oxalato)borate, lithium tetrafluoro(oxalato)phosphate, lithium oxalate, 2-vinylpyridine, 4-vinylpyridine, cyclic exomethylene carbonates, sulfones, cyclic and acyclic sulfonates, acyclic sulfites, cyclic and acyclic sulfinates, organic esters, inorganic acids, acyclic and cyclic alkanes, which acyclic and cyclic alkanes have a boiling point at 1 bar of at least 36° C, aromatic compounds, halogenated cyclic and acyclic sulfonylimides, halogenated cyclic and acyclic phosphate esters, halogenated cyclic and acyclic phosphines, halogenated cyclic and acyclic phosphites, halogenated cyclic and acyclic phosphazenes, halogenated cyclic and acyclic silylamines, halogenated cyclic and acyclic halogenated esters, halogenated cyclic and acyclic amides, halogenated cyclic and acyclic anhydrides and halogenated organic heterocycles.

**14.** Rechargeable battery cell (2, 20, 40) according to any one of the preceding claims, in which the electrolyte has the composition

(i) 5 to 99.4 wt% sulfur dioxide,
(ii) 0.6 to 95 wt% of the first conducting salt,
(iii) 0 to 25 wt.% of the second conducting salt, and
(iv) 0 to 10 wt.% of the additive,

based on the total weight of the electrolyte composition.

**15.** Rechargeable battery cell (2, 20, 40) according to any one of the preceding claims, in which the material quantity concentration of the first conducting salt is in the range from 0.01 mol/l to 10 mol/l, preferably from 0.05 mol/l to 10 mol/l, further preferably from 0.1 mol/l to 6 mol/l and most preferably from 0.2 mol/l to 3.5 mol/l based on the total volume of the electrolyte.

**16.** Rechargeable battery cell (2, 20, 40) according to any one of the preceding claims, in which the electrolyte contains at least 0.1 mol $SO_2$, preferably at least 1 mol $SO_2$, further preferably at least 5 mol $SO_2$, further preferably at least 10 mol $SO_2$ and most preferably at least 20 mol $SO_2$ per mol of conducting salt.

**17.** Rechargeable battery cell (2, 20, 40) according to any one of the preceding claims, in which the active metal is

- an alkali metal, in particular lithium or sodium;
- an earth alkali metal, in particular calcium;
- a metal of group 12 of the periodic table, in particular zinc; or aluminum.

**18.** Rechargeable battery cell (2, 20, 40) according to any one of the preceding claims, in which the positive electrode (4, 23, 44) contains, as active material, at least one compound which preferably has the composition $A_xM'_yM''_z0_a$, wherein

- A is at least one metal which is selected from the group which is formed by the alkali metals, the earth alkali metals, the metals of group 12 of the periodic table or aluminum;
- M' is at least one metal selected from the group formed by the elements Ti, V, Cr, Mn, Fe, Co, Ni, Cu and Zn;
- M" is at least one element selected from the group formed by the elements of groups 2, 3,4, 5, 6, 7, 8, 9, 10, 11, 12, 13, 14, 15 and 16 of the periodic table of elements;
- x and y are numbers greater than 0 independently of each other;
- z is a number greater than or equal to 0; and
- a is a number greater than 0.

**19.** Rechargeable battery cell (2, 20, 40) according to claim 18, in which the compound has the composition $Li_xNi_{y1}Mn_{y2}Co_zO_a$, wherein x, y1and y2 are numbers greater than 0 independently of each other, z is a number greater than or equal to 0, and a is a number greater than 0.

**20.** Rechargeable battery cell (2, 20, 40) according to claim 18, in which the compound has the composition $A_xM'_yM''^1_{z1}M''^2_{z2}O_4$, wherein

- $M''^1$ is selected from the group formed by the elements of groups 2, 3, 4, 5, 6, 7, 8, 9, 10, 11, 12, 13, 14, 15 and 16 of the periodic table of elements;
- $M''^2$ is the element phosphorus;
- x and y are numbers greater than 0 independently of each other;

- z1 is a number greater than 0; and
- z2 has the value 1.

**21.** Rechargeable battery cell (2, 20, 40) according to any one of the preceding claims, in which the positive electrode (4, 23, 44) contains at least one metal compound selected from the group formed by a metal oxide, a metal halide and a metal phosphate, wherein the metal of the metal compound is preferably a transition metal of atomic numbers 22 to 28 of the periodic table of elements, in particular cobalt, nickel, manganese or iron.

**22.** Rechargeable battery cell (2, 20, 40) according to any one of the preceding claims, in which the positive electrode (4, 23, 44) contains at least one metal compound which has the chemical structure of a spinel, a layered oxide, a conversion compound or a polyanionic compound.

**23.** Rechargeable battery cell (2, 20, 40) according to any one of the preceding claims, in which the negative electrode (5, 22, 45) is an insertion electrode which preferably contains carbon as an active material, in particular in the modification graphite.

**24.** Rechargeable battery cell (2, 20, 40) according to any one of the preceding claims,

in which the positive electrode (4, 23, 44) and/or the negative electrode (5, 22, 45) contains at least one binder, preferably a fluorinated binder, in particular a polyvinylidene fluoride and/or a terpolymer of tetrafluoroethylene, hexafluoropropylene and vinylidene fluoride, or
a binder consisting of a polymer constructed from monomer structural units of a conjugated carboxylic acid or from the alkali, earth alkali or ammonium salt of this conjugated carboxylic acid or of a combination thereof, or
a binder consisting of a polymer based on monomeric styrene and butadiene structural units, or a binder from the group of carboxymethyl celluloses,
wherein the binder is preferably present in a concentration of at most 20 wt.%, further preferably at most 15 wt.%, further preferably at most 10 wt.%, further preferably at most 7 wt.%, further preferably at most 5 wt.% and most preferably at most 2 wt.%, based on the total weight of the positive electrode or the negative electrode.

**25.** Rechargeable battery cell (2, 20, 40) according to any one of the preceding claims, which comprises several negative electrodes (5, 22, 45) and at least one, preferably several positive electrodes (4, 23, 44) which are arranged alternately stacked in the housing (1, 28), wherein the positive electrodes (4, 23, 44) and the negative electrodes (5, 22, 45) are preferably electrically separated from each other by separators (11, 21, 13).

## Revendications

**1.** Cellule de batterie rechargeable (2, 20, 40) contenant un métal actif, au moins une électrode positive (4, 23, 44) avec un élément de dérivation (26), au moins une électrode négative (5, 22, 45) avec un élément de dérivation (27), un boîtier (1, 28) et un électrolyte,

dans laquelle l’élément de dérivation (26) de l’électrode positive (4, 23, 40) et l’élément de dérivation (27) de l’électrode négative (5, 22, 45) sont réalisés indépendamment l’un de l’autre à partir d’un matériau qui est sélectionné parmi le groupe qui est formé de l’aluminium et du cuivre,
et dans laquelle l’électrolyte est à base de SO2 et contient au moins un premier sel conducteur qui présente la formule (I),

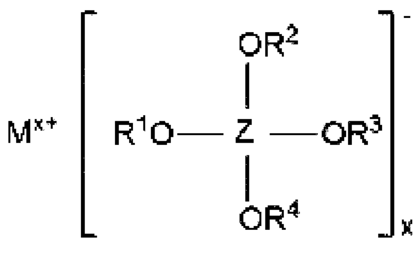

Formule (I)

dans laquelle

- M est un métal qui est sélectionné parmi le groupe qui est formé de métaux alcalins, métaux alcalino-terreux, métaux du groupe 12 du tableau périodique des éléments et d'aluminium ;
- x est un nombre entier de 1 à 3 ;
- les substituants $R^1$, $R^2$, $R^3$ et $R^4$ sont sélectionnés indépendamment les uns des autres parmi le groupe qui est formé par alkyle en $C_1$-$C_{10}$, alcényle en $C_2$-$C_{10}$, alcynyle en $C_2$-$C_{10}$, cycloalkyle en $C_3$-$C_{10}$, aryle en $C_6$-$C_{14}$ et hétéroaryle en $C_5$-$C_{14}$ ; dans laquelle
- en option au moins deux des substituants $R^1$, $R^2$, $R^3$ et R4 sont pontés pour la formation d'un ligand chélatant entre eux ; et
- en option au moins l'un des substituants $R^1$, $R^2$, $R^3$ et R est substitué par au moins un atome de fluor et/ou par au moins un groupe chimique, dans laquelle le groupe chimique est sélectionné parmi le groupe qui est formé par alkyle en $C_1$-$C_4$, alcényle en $C_2$-$C_4$, alcynyle en $C_2$-$C_4$, phényle et benzyle ;

dans laquelle Z est de l'aluminium ou du bore.

**2.** Cellule de batterie rechargeable (2, 20, 40) selon la revendication 1, pour laquelle l'élément de dérivation (26) de l'électrode positive (4, 23, 44) est réalisé à partir d'aluminium.

**3.** Cellule de batterie rechargeable (2, 20, 40) selon la revendication 1 ou 2, pour laquelle l'élément de dérivation (27) de l'électrode négative (5, 22, 45) est réalisé à partir de cuivre.

**4.** Cellule de batterie rechargeable (2, 20, 40) selon l'une quelconque des revendications précédentes,
pour laquelle l'élément de dérivation (26) de l'électrode positive (4, 23, 44) et/ou l'élément de dérivation (27) de l'électrode négative (5, 22, 45)

- est configurée de manière planaire sous la forme d'une tôle métallique, d'un film métallique, de préférence avec une structure perforée ou réticulaire ou d'un film plastique revêtu de métal, ou
- en trois dimensions sous la forme d'une structure métallique poreuse, en particulier sous la forme d'une mousse métallique (18).

**5.** Cellule de batterie rechargeable (2, 20, 40) selon l'une quelconque des revendications précédentes,
pour laquelle l'électrolyte est stable à l'oxydation au moins jusqu'à un potentiel supérieur de 4,0 volts, de préférence au moins jusqu'à un potentiel supérieur de 4,2 volts, plus préférentiellement au moins jusqu'à un potentiel supérieur de 4,4 volts, plus préférentiellement au moins jusqu'à un potentiel supérieur de 4,6 volts, plus préférentiellement au moins jusqu'à un potentiel supérieur de 4,8 volts et le plus préférentiellement au moins jusqu'à un potentiel supérieur de 5,0 volts.

**6.** Cellule de batterie rechargeable (2, 20, 40) selon l'une quelconque des revendications précédentes,
pour laquelle les substituants $R^1$, $R^2$, $R^3$ et $R^4$ du premier sel conducteur sont sélectionnés indépendamment les uns des autres parmi le groupe qui est formé par

- alkyle en $C_1$-$C_6$ ; de préférence par alkyle en $C_2$-$C_4$ ; le plus préférentiellement par les groupes alkyles 2-propyle, méthyle et éthyle ;
- alcényle en $C_2$-$C_6$ ; de préférence par alcényle en $C_2$-$C_4$ ; le plus préférentiellement par les groupes alcényles éthényle et propényle ;
- alcynyle en $C_2$-$C_6$ ; de préférence par alcynyle en $C_2$-$C_4$ ;
- cycloalkyle en $C_3$-$C_6$ ;
- phényle ; et
- hétéroaryle en $C_5$-$C_7$.

**7.** Cellule de batterie rechargeable (2, 20, 40) selon l'une quelconque des revendications précédentes,
pour laquelle au moins l'un des substituants $R^1$, $R^2$, $R^3$ et $R^4$ du premier sel conducteur est un groupe $CF_3$.

**8.** Cellule de batterie rechargeable (2, 20, 40) selon l'une quelconque des revendications 1 à 6, pour laquelle le premier sel conducteur est sélectionné parmi le groupe qui est formé par

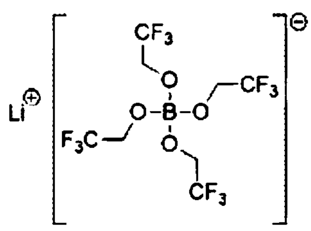

$Li[B(OCH_2CF_3)_4]$

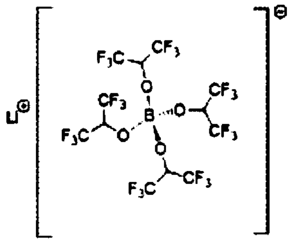

$Li[B(OCH(CF_3)_2)_4]$

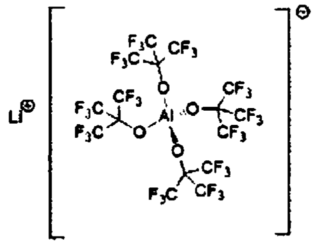

$Li[Al(OC(CF_3)_3)_4]$

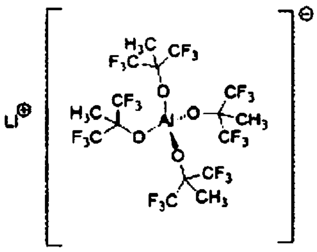

$Li[Al(OC(CH_3)(CF_3)_2)_4]$

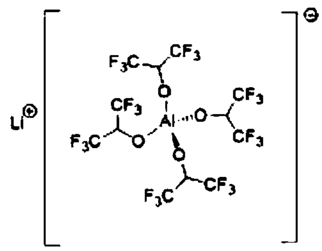

$Li[Al(OCH(CF_3)_2)_4]$

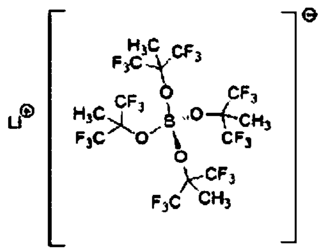

$Li\ [B(OC(CH_3)(CF_3)_2)_4]$

**9.** Cellule de batterie rechargeable (2, 20, 40) selon l'une quelconque des revendications 1 à 6, pour laquelle le premier sel conducteur présente la formule

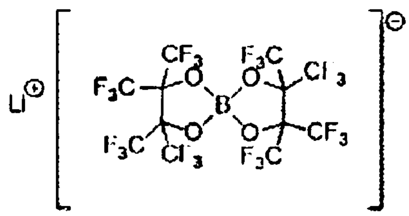

$LiB(O_2C_2(CF_3)_4)_2$

suivante.

**10.** Cellule de batterie rechargeable (2, 20, 40) selon l'une quelconque des revendications précédentes,
pour laquelle l'électrolyte contient au moins un second sel conducteur différent du premier sel conducteur selon la formule (I).

**11.** Cellule de batterie rechargeable (2, 20, 40) selon la revendication 10,
pour laquelle le second sel conducteur de l'électrolyte est un composé métallique alcalin, en particulier un composé de lithium qui est sélectionné parmi le groupe qui est formé par un aluminate, en particulier un tétrahalogénoaluminate de lithium, un halogénure, un oxalate, un borate, un phosphate, un arséniate et un gallate.

**12.** Cellule de batterie rechargeable (2, 20, 40) selon l'une quelconque des revendications précédentes,
pour laquelle l'électrolyte contient au moins un additif.

**13.** Cellule de batterie rechargeable (2, 20, 40) selon la revendication 12,
pour laquelle l'additif de l'électrolyte est sélectionné parmi le groupe qui est formé par du carbonate de vinylène et ses dérivés, du carbonate de vinyléthylène et ses dérivés, du carbonate de méthyléthylène et ses dérivés, du bis(oxalato) borate de lithium, du difluoro(oxalato)borate de lithium, du tétrafluoro(oxalato)phosphate de lithium, de l'oxalate de lithium, du 2-vinylpyridine, du 4-vinylpyridine, des carbonates d'exométhylène cycliques, des sultones, des sulfonates cycliques et acycliques, des sulfites acycliques, des sulfinates cycliques et acyclische, des esters organiques, des acides anorganiques, des alcanes acycliques et cycliques, lesquels alcanes acycliques et cycliques présentent un point d'ébullition à 1 bar d'au moins 36 °C, des composés aromatiques, des sulfonylimides hélogénés cycliques et acycliques, des esters phosphoriques halogénés cycliques et acycliques, des phosphines halogénées cycliques et acycliques, des phosphites halogénées cycliques et acycliques, des phosphazènes halogénés cycliques et acycliques, des amines silyliques halogénées cycliques et acycliques, des esters halogénés cycliques et halogénés acycliques, des amides halogénés cycliques et acycliques, des anhydrides halogénés cycliques et acycliques et des hétérocycles organiques halogénés.

**14.** Cellule de batterie rechargeable (2, 20, 40) selon l'une quelconque des revendications précédentes, pour laquelle l'électrolyte présente la composition de

(i) 5 à 99,4 % en poids de dioxyde de soufre,
(ii) 0,6 à 95 % en poids du premier sel conducteur,
(iii) 0 à 25 % en poids du second sel conducteur et
(iv) 0 à 10 % en poids de l'additif,

par rapport au poids total de la composition d'électrolyte.

**15.** Cellule de batterie rechargeable (2, 20, 40) selon l'une quelconque des revendications précédentes, dans laquelle la concentration molaire du premier sel conducteur est dans la plage de 0,01 mol/l à 10 mol/l, de préférence de 0,05 mol/l à 10 mol/l, plus préférentiellement de 0,1 mol/l à 6 mol/l et le plus préférentiellement de 0,2 mol/l à 3,5mol/l par rapport au volume total de l'électrolyte.

**16.** Cellule de batterie rechargeable (2, 20, 40) selon l'une quelconque des revendications précédentes, dans laquelle l'électrolyte contient au moins 0,1 mole de $SO_2$, de préférence au moins 1 mole de $SO_2$, plus préférentiellement au moins 5 moles de $SO_2$, plus préférentiellement au moins 10 moles de $SO_2$ et le plus préférentiellement au moins 20 moles de $SO_2$ par mole de sel conducteur.

**17.** Cellule de batterie rechargeable (2, 20, 40) selon l'une quelconque des revendications précédentes, pour laquelle le métal actif est

- un métal alcalin, en particulier du lithium ou du sodium ;
- un métal alcalino-terreux, en particulier du calcium ;
- un métal du groupe 12 du tableau périodique, en particulier du zinc ; ou de l'aluminium.

**18.** Cellule de batterie rechargeable (2, 20, 40) selon l'une quelconque des revendications précédentes, pour laquelle l'électrode positive (4, 23, 44) contient en tant que matériau actif au moins un composé qui présente de préférence la composition $A_xM'_yM''_z0_a$, dans laquelle

- A est au moins un métal qui est sélectionné parmi le groupe qui est formé par les métaux alcalins, les métaux alcalino-terreux, les métaux du groupe 12 du tableau périodique ou l'aluminium ;
- M' est au moins un métal qui est sélectionné parmi le groupe qui est formé par les éléments Ti, V, Cr, Mn, Fe, Co, Ni, Cu et Zn ;
- M" est au moins un élément qui est sélectionné parmi le groupe qui est formé par les éléments des groupes 2, 3, 4, 5, 6, 7, 8, 9, 10, 11, 12, 13, 14, 15 et 16 du tableau périodique des éléments ;
- x et y sont indépendamment les uns des autres des nombres supérieurs à 0 ;
- z est un nombre supérieur ou égal à 0 ; et
- a est un nombre supérieur à 0.

**19.** Cellule de batterie rechargeable (2, 20, 40) selon la revendication 18, pour laquelle le composé présente la composition $Li_xNi_{y1}Mn_{y2}Co_zO_a$, dans laquelle x, y1 et y2 sont indépendamment les uns des autres des nombres supérieurs à 0, z est un nombre supérieur ou égal à 0 et a est un nombre supérieur à 0.

**20.** Cellule de batterie rechargeable (2, 20, 40) selon la revendication 18, pour laquelle le composé présente la composition $A_xM'_yM''^1_{z1}M''^2_{z2}O_4$, dans laquelle

- $M''^1$ est sélectionné parmi le groupe qui est formé par les éléments des groupes 2, 3, 4, 5, 6, 7, 8, 9, 10, 11, 12, 13, 14, 15 et 16 du tableau périodique des éléments ;
- $M''^2$ est l'élément phosphore ;
- x et y sont indépendamment les uns des autres des nombres supérieurs à 0 ;
- z1 est un nombre supérieur à 0 ; et
- z2 présente la valeur 1.

**21.** Cellule de batterie rechargeable (2, 20, 40) selon l'une quelconque des revendications précédentes, pour laquelle l'électrode positive (4, 23, 44) contient au moins un composé métallique qui est sélectionné parmi le groupe qui est formé par un oxyde métallique, un halogénure métallique et un phosphate métallique, dans laquelle le métal du composé métallique est de préférence un métal de transition des numéros atomiques 22 à 28 du tableau périodique des éléments, en particulier cobalt, nickel, manganèse ou fer.

**22.** Cellule de batterie rechargeable (2, 20, 40) selon l'une quelconque des revendications précédentes, pour laquelle l'électrode positive (4, 23, 44) contient au moins un composé métallique qui présente la structure chimique d'un spinelle, d'un oxyde stratifié, d'un composé de transformation ou d'un composé polyanionique.

**23.** Cellule de batterie rechargeable (2, 20, 40) selon l'une quelconque des revendications précédentes, pour laquelle l'électrode négative (5, 22, 45) est une électrode d'insertion qui contient de préférence du carbone en tant que matériau actif, en particulier dans la modification du graphite.

**24.** Cellule de batterie rechargeable (2, 20, 40) selon l'une quelconque des revendications précédentes,

pour laquelle l'électrode positive (4, 23, 44) et/ou l'électrode négative (5, 22, 45) contient au moins un liant, de préférence un liant fluoré, en particulier un fluorure de polyvinylidène et/ou un terpolymère de tétrafluoroéthylène, d'hexafluoropropylène et de fluorure de vinylidène, ou

un liant qui se compose d'un polymère qui est constitué d'unités de structure monomères d'un acide carboxylique conjugué ou d'un sel alcalin, alcalino-terreux ou d'ammonium de cet acide carboxylique conjugué ou d'une combinaison de ceux-ci ou

un liant qui se compose d'un polymère qui se base sur des unités de structure de styrène et butadiène monomères, ou contient un liant parmi le groupe des carboxyméthylcelluloses,

dans laquelle le liant se présente de préférence dans une concentration d'au plus 20 % en poids, plus préférentiellement d'au plus 15 % en poids, plus préférentiellement d'au plus 10 % en poids, plus préférentiellement d'au plus 7 % en poids, plus préférentiellement d'au plus 5 % en poids et plus préférentiellement d'au plus 2% en poids par rapport au poids total de l'électrode positive ou de l'électrode négative.

**25.** Cellule de batterie rechargeable (2, 20, 40) selon l'une quelconque des revendications précédentes, qui comprend plusieurs électrodes négatives (5, 22, 45) et au moins une, de préférence plusieurs électrodes positives (4, 23, 44) qui sont agencées en alternance empilées dans le boîtier (1, 28), dans laquelle les électrodes positives (4, 23, 44) et les électrodes négatives (5, 22, 45) sont de préférence séparées électriquement les unes des autres respectivement par des séparateurs (11, 21, 13).

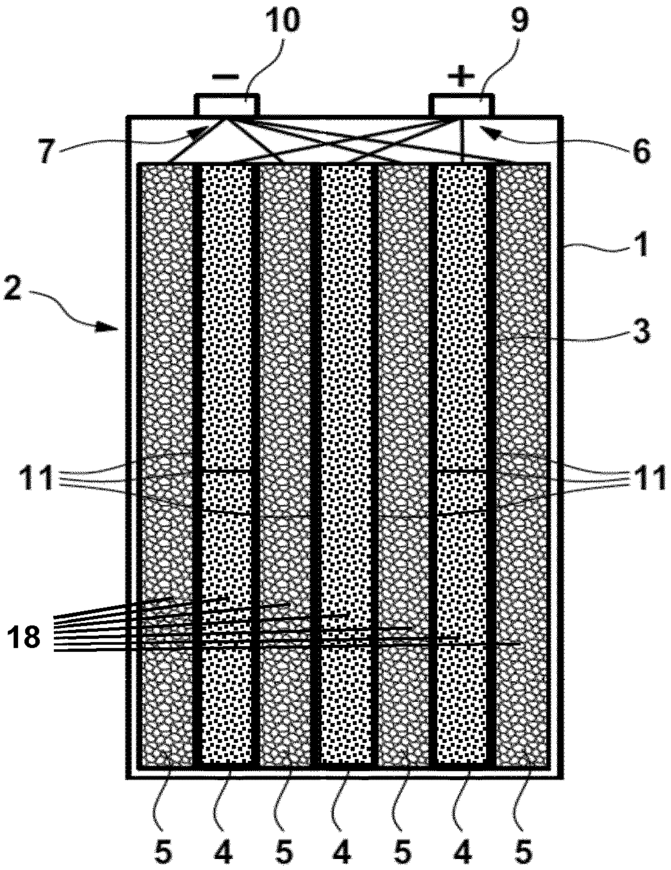


FIG. 1

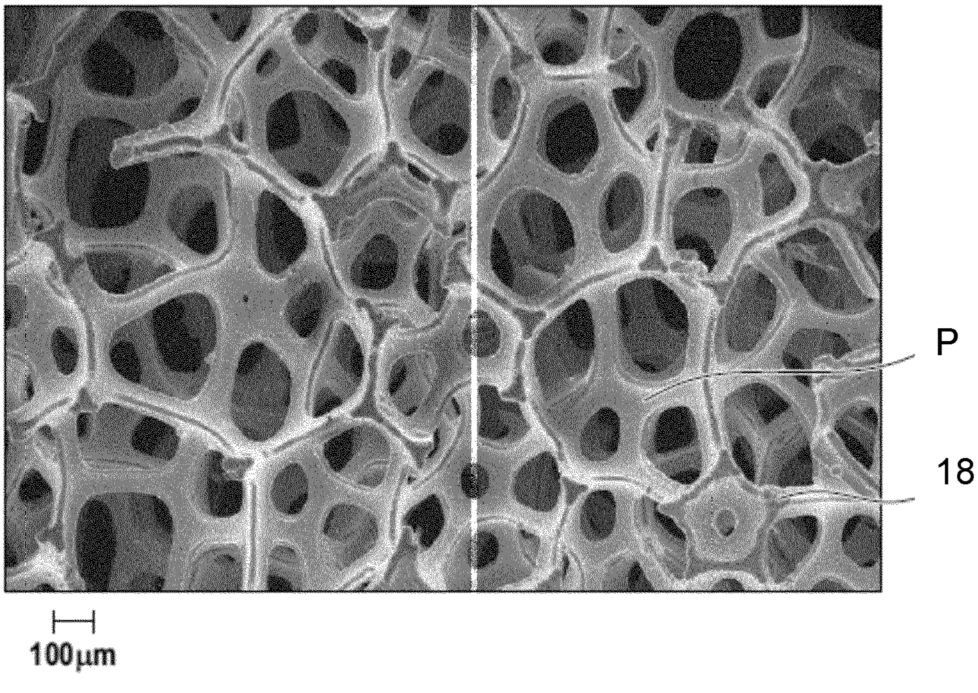


FIG. 2

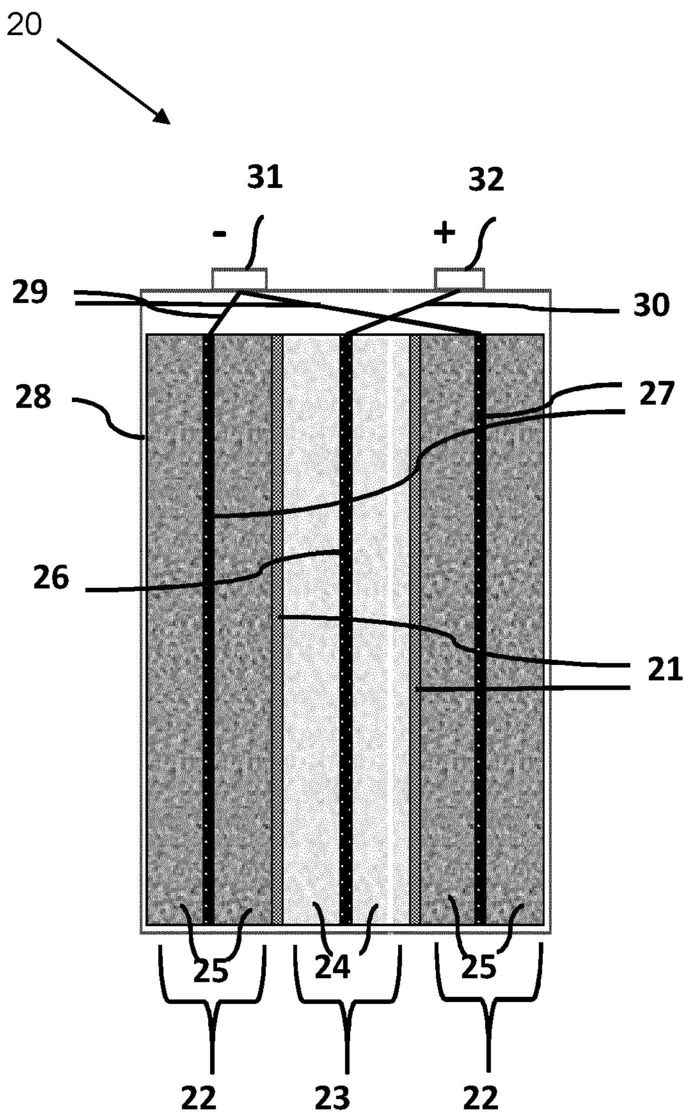


FIG. 3

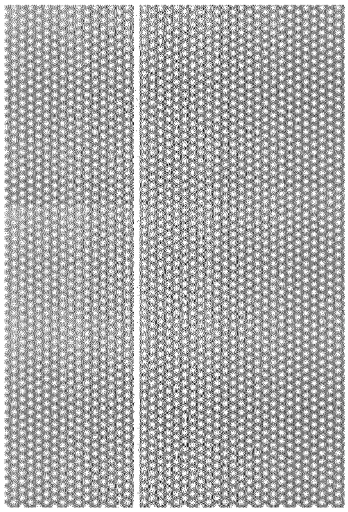

FIG. 4

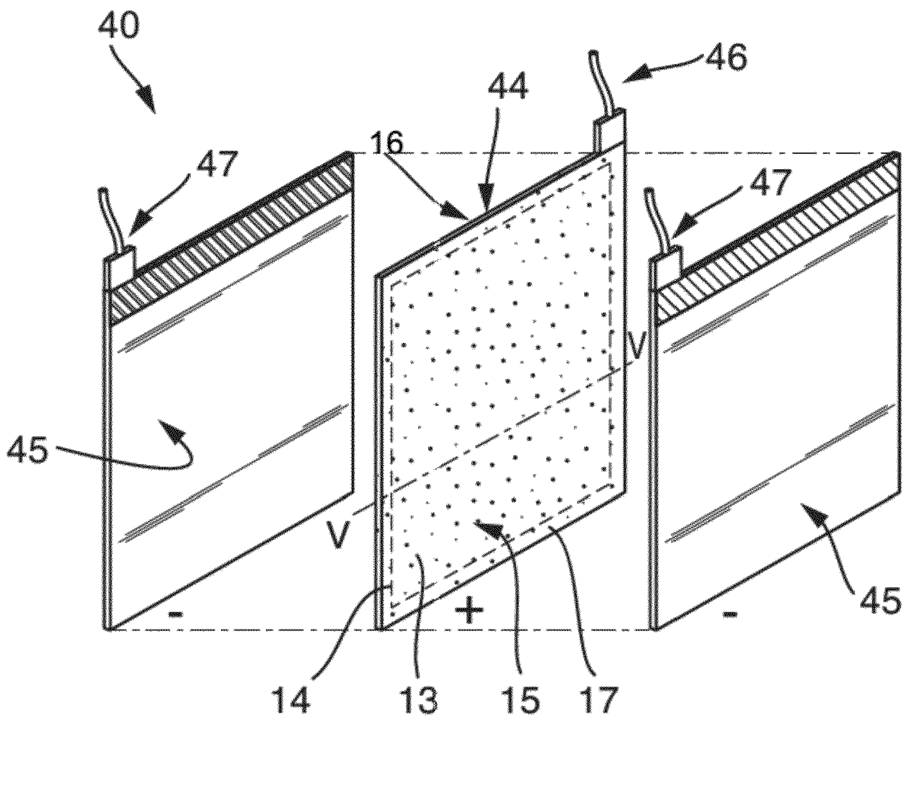


FIG. 5

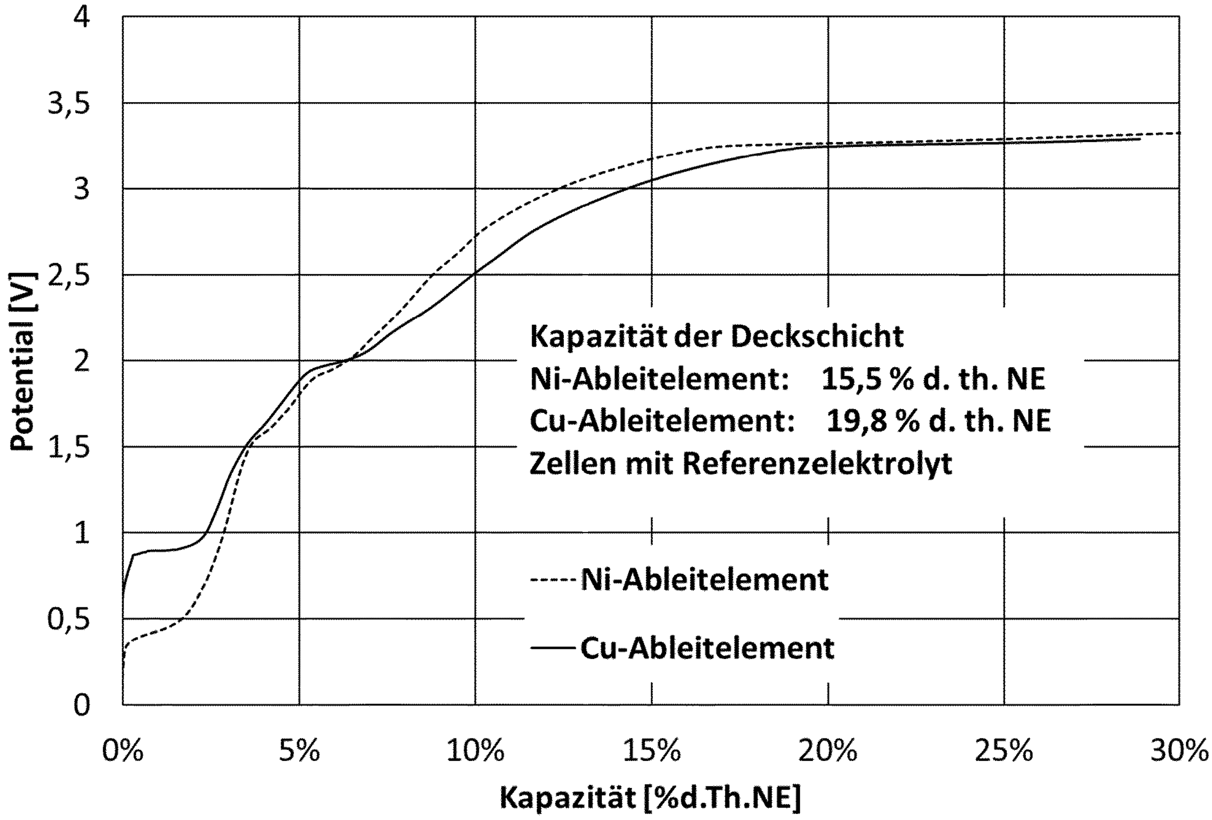
4
3,5
3
2,5
2
1,5
1
0,5
0
Potential [V]
0%
5%
10%
15%
20%
25%
30%
Kapazität [%d.Th.NE]
Kapazität der Deckschicht
Ni-Ableitelement: 15,5 % d. th. NE
Cu-Ableitelement: 19,8 % d. th. NE
Zellen mit Referenzelektrolyt
Ni-Ableitelement
Cu-Ableitelement

FIG. 6

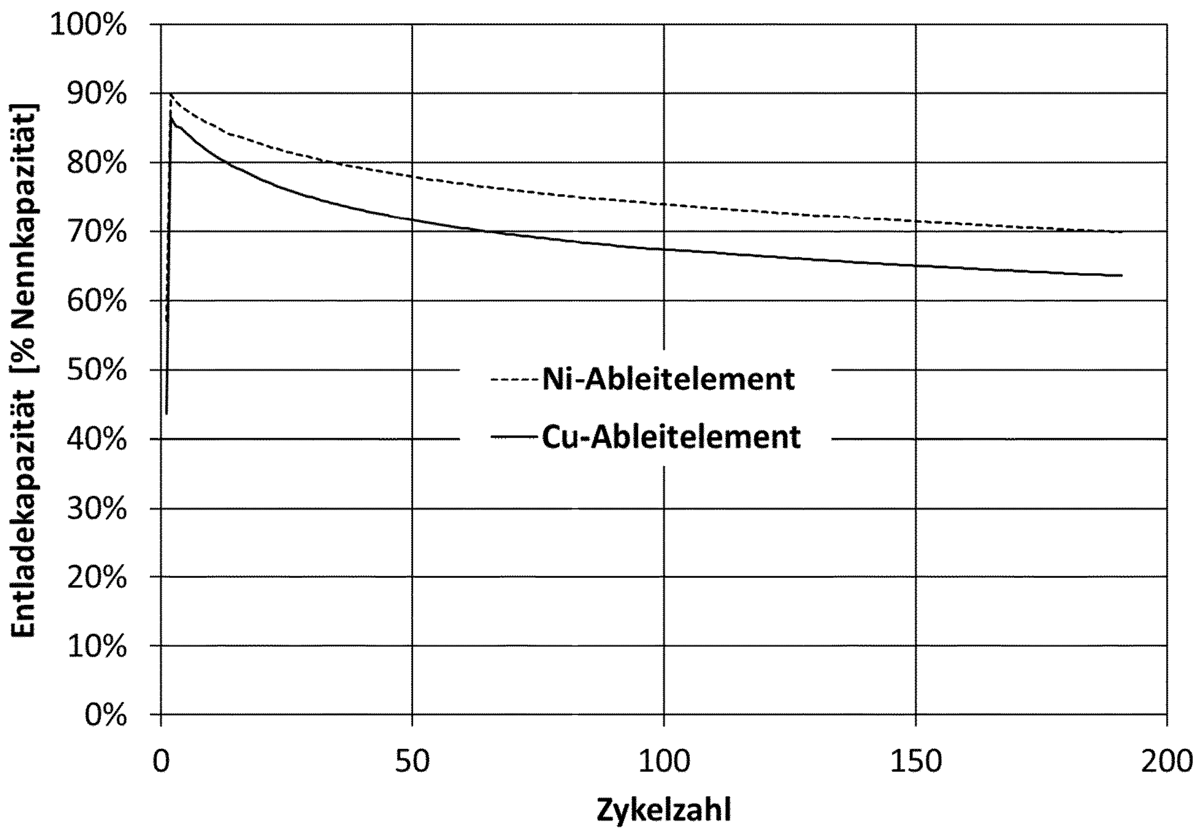
100%
90%
80%
70%
60%
50%
40%
30%
20%
10%
0%
Entladekapazität [% Nennkapazität]
0
50
100
150
200
Zykelzahl
Ni-Ableitelement
Cu-Ableitelement

FIG. 7

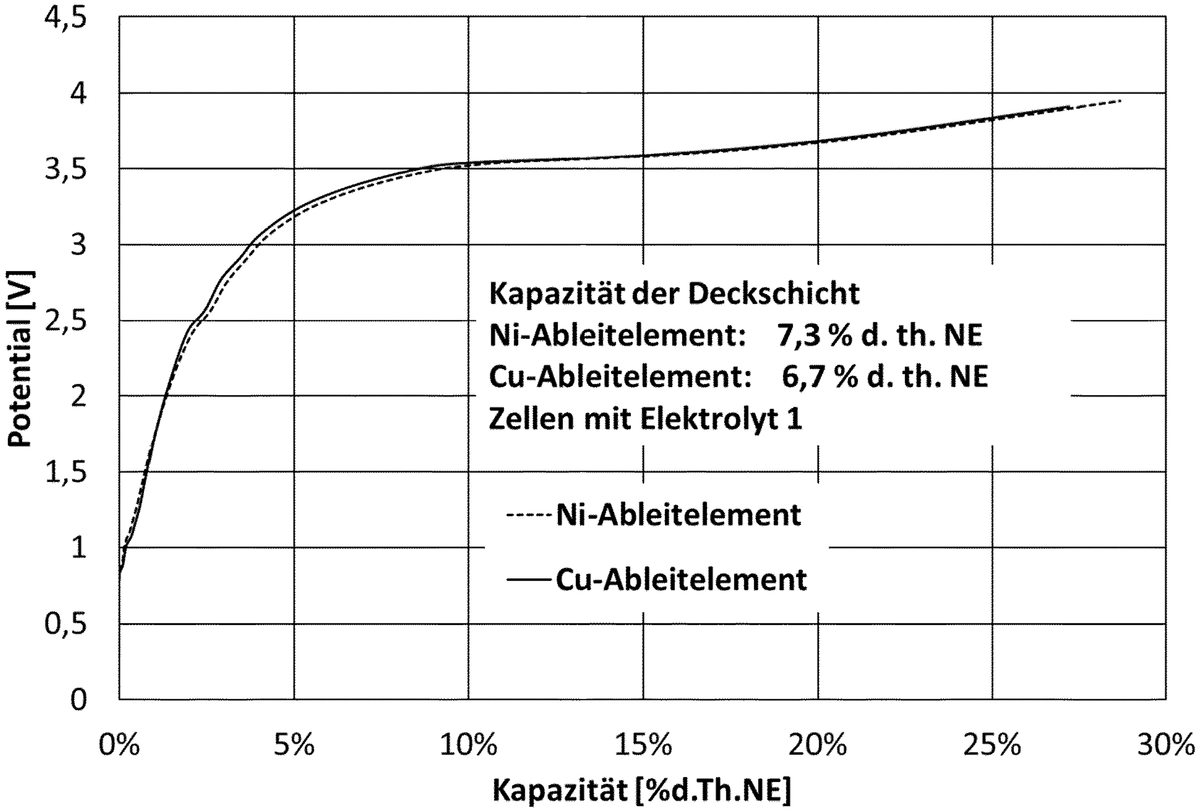
4,5
4
3,5
3
2,5
2
1,5
1
0,5
0
Potential [V]
0%
5%
10%
15%
20%
25%
30%
Kapazität [%d.Th.NE]
Kapazität der Deckschicht
Ni-Ableitelement: 7,3 % d. th. NE
Cu-Ableitelement: 6,7 % d. th. NE
Zellen mit Elektrolyt 1
Ni-Ableitelement
Cu-Ableitelement

FIG. 8

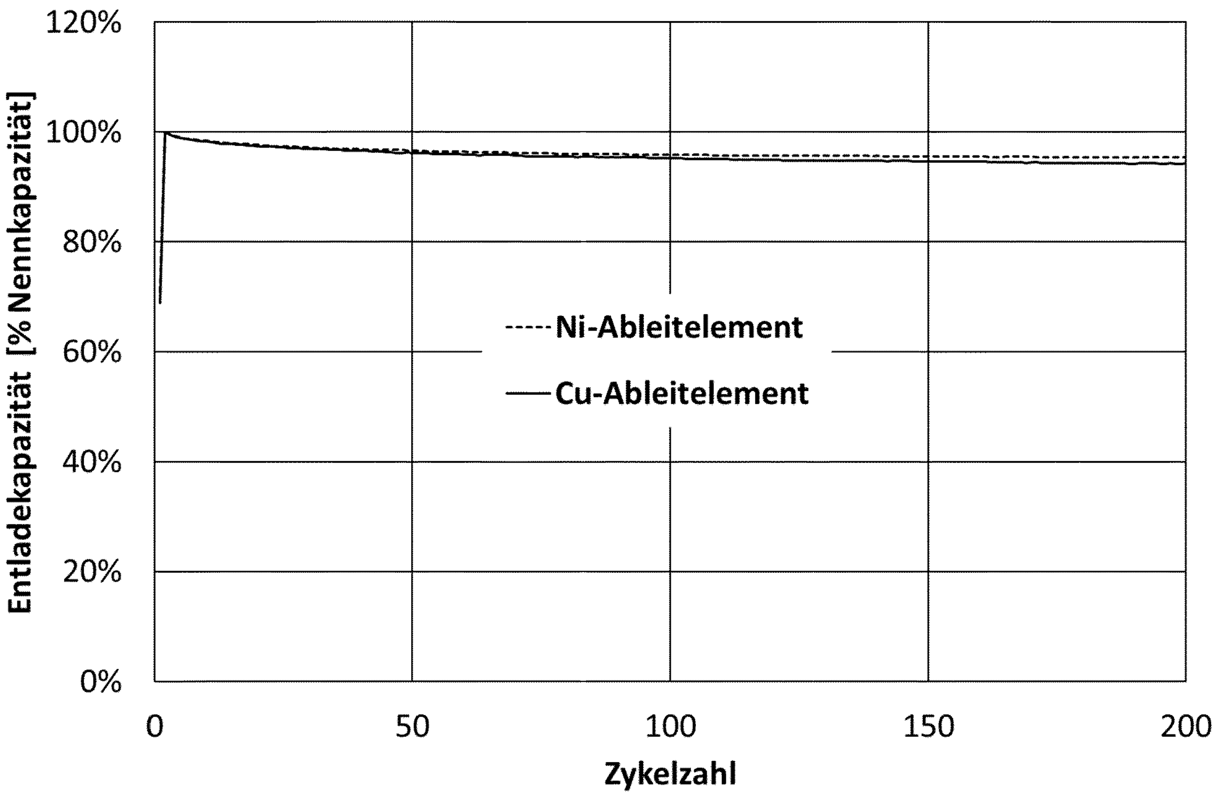
120%
100%
80%
60%
40%
20%
0%
Entladekapazität [% Nennkapazität]
0
50
100
150
200
Zykelzahl
Ni-Ableitelement
Cu-Ableitelement

FIG. 9

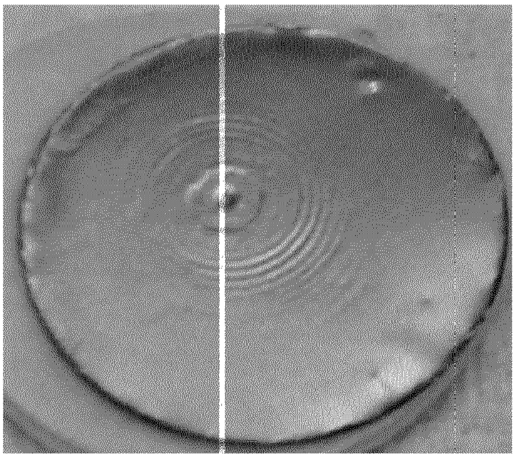

FIG. 10

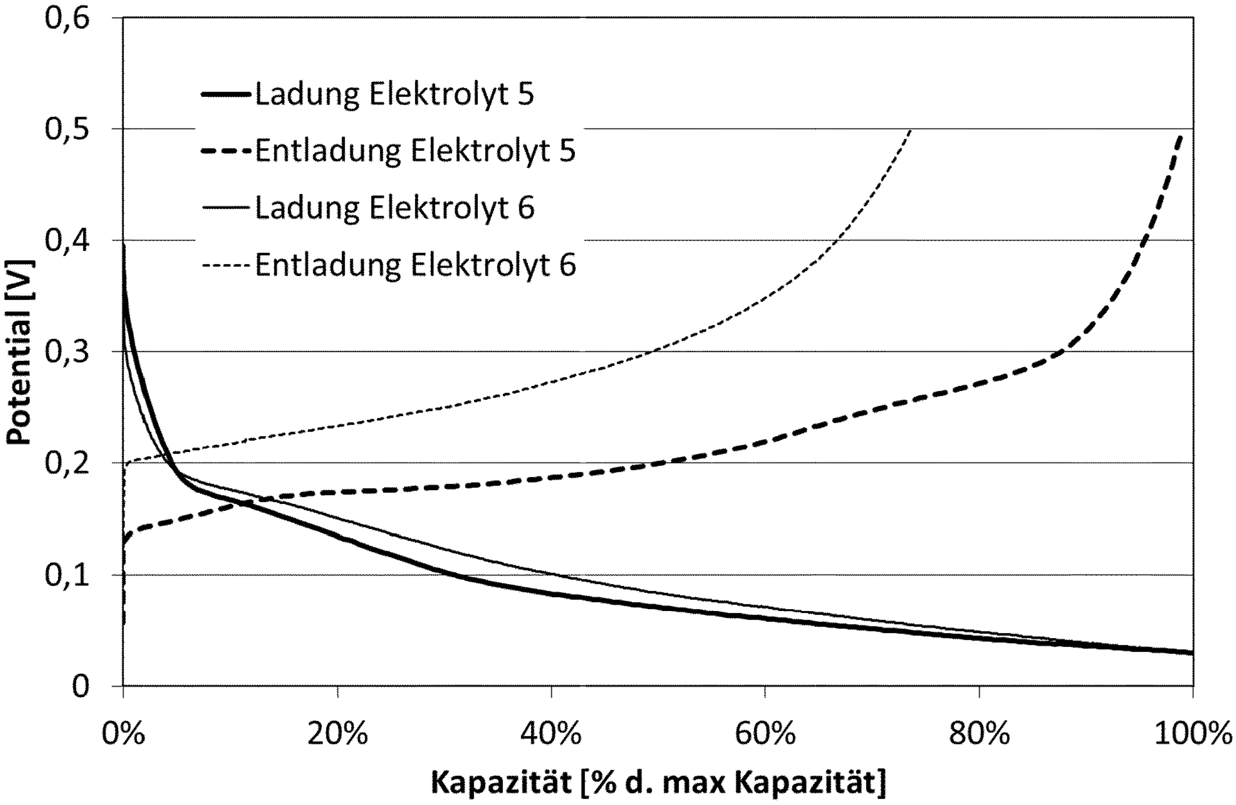
0,6
0,5
0,4
0,3
0,2
0,1
0
Potential [V]
Ladung Elektrolyt 5
Entladung Elektrolyt 5
Ladung Elektrolyt 6
Entladung Elektrolyt 6
0%
20%
40%
60%
80%
100%
Kapazität [% d. max Kapazität]

FIG. 11

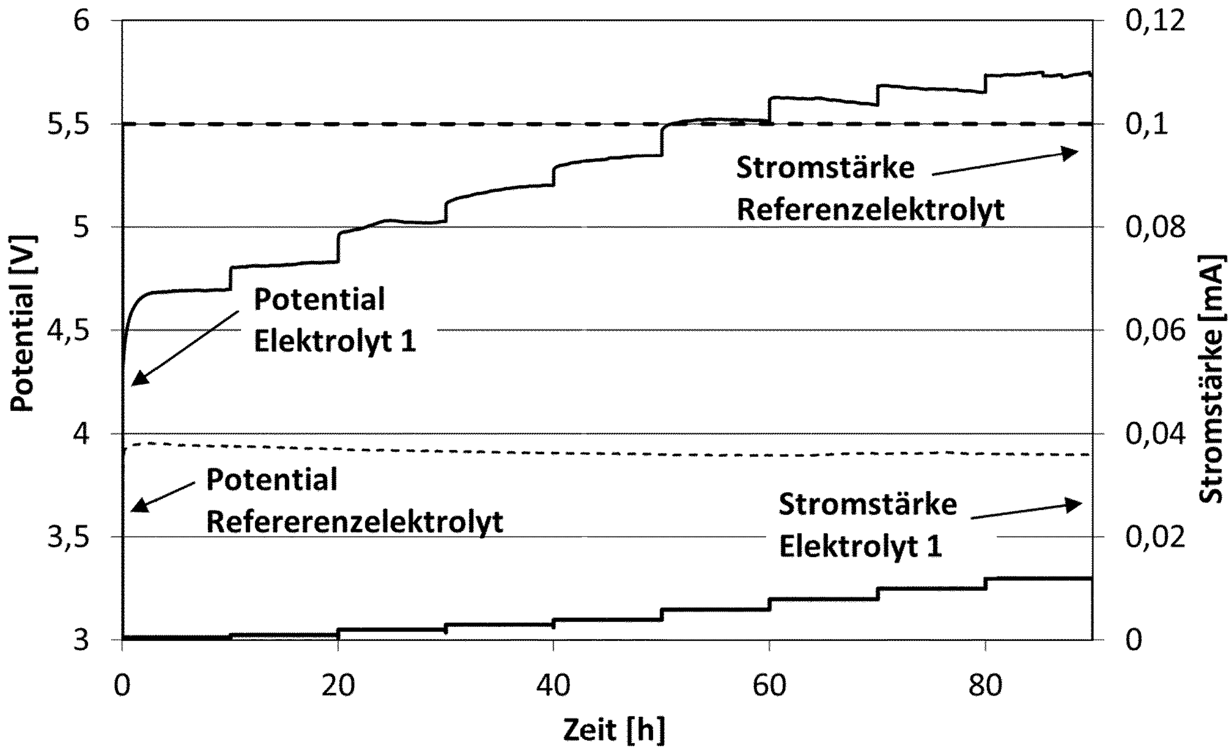


FIG. 12

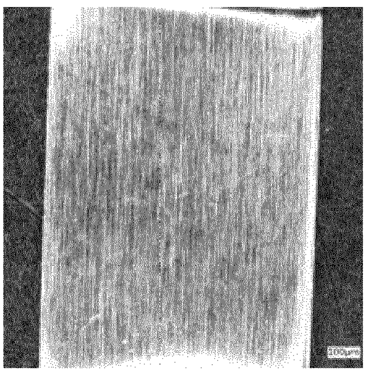

FIG. 13

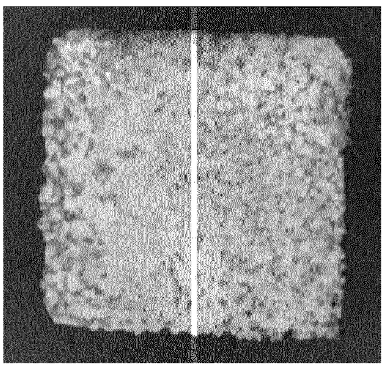

FIG. 14

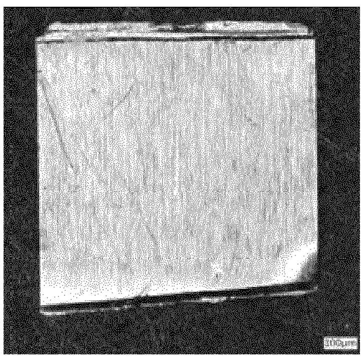

FIG. 15

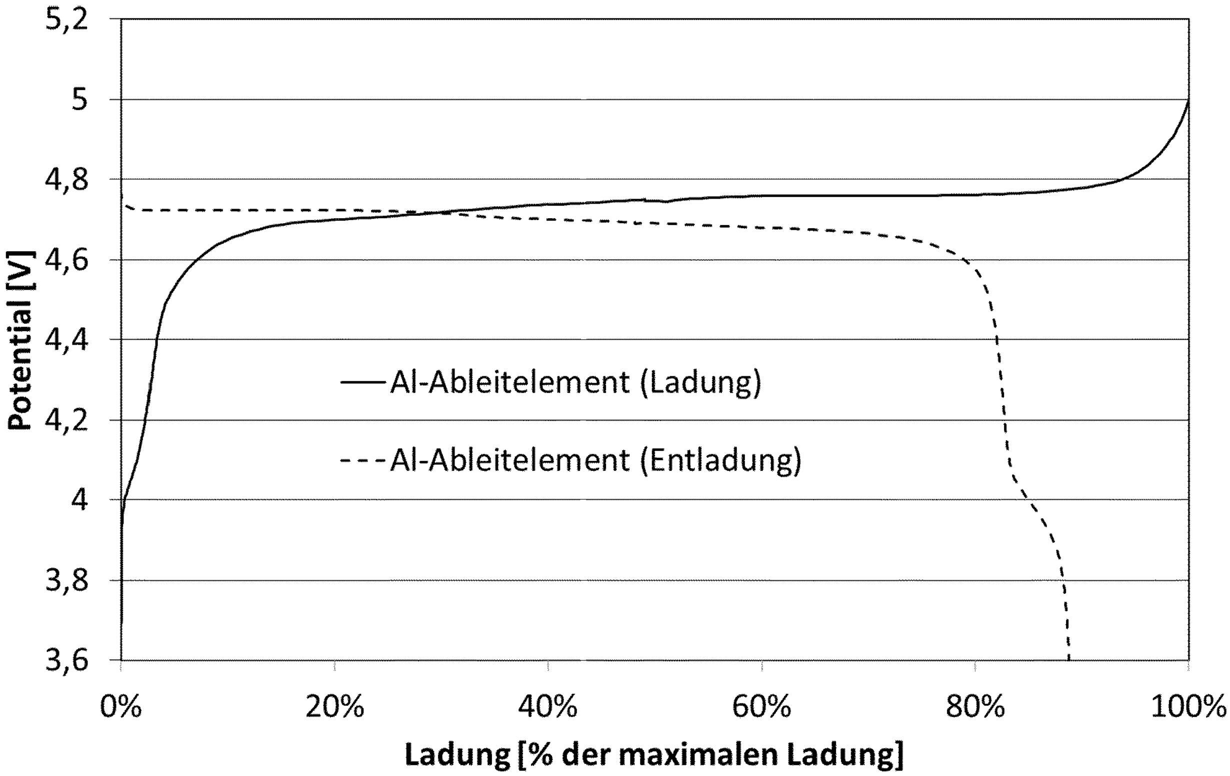
5,2
5
4,8
4,6
4,4
4,2
4
3,8
3,6
Potential [V]
Al-Ableitelement (Ladung)
Al-Ableitelement (Entladung)
0%
20%
40%
60%
80%
100%
Ladung [% der maximalen Ladung]

FIG.16

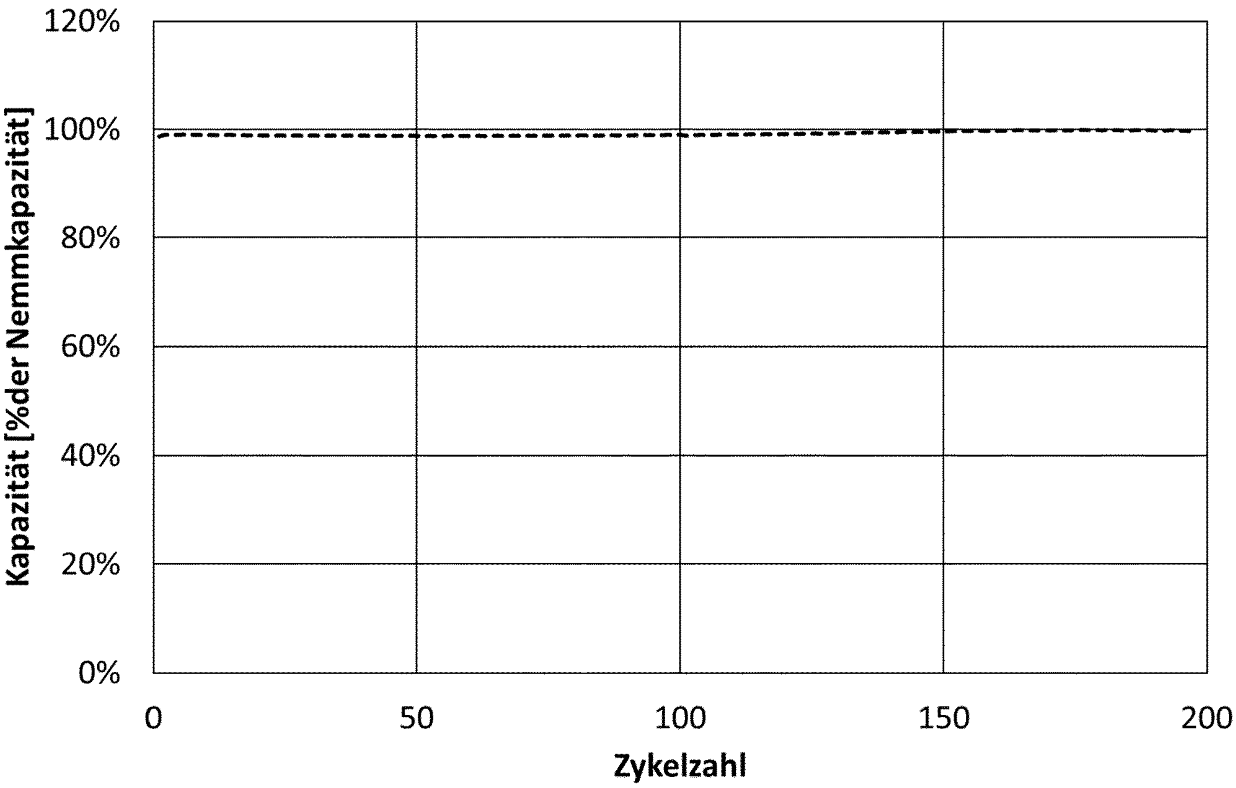
120%
100%
80%
60%
40%
20%
0%
Kapazität [%der Nemmkapazität]
0
50
100
150
200
Zykelzahl

FIG. 17

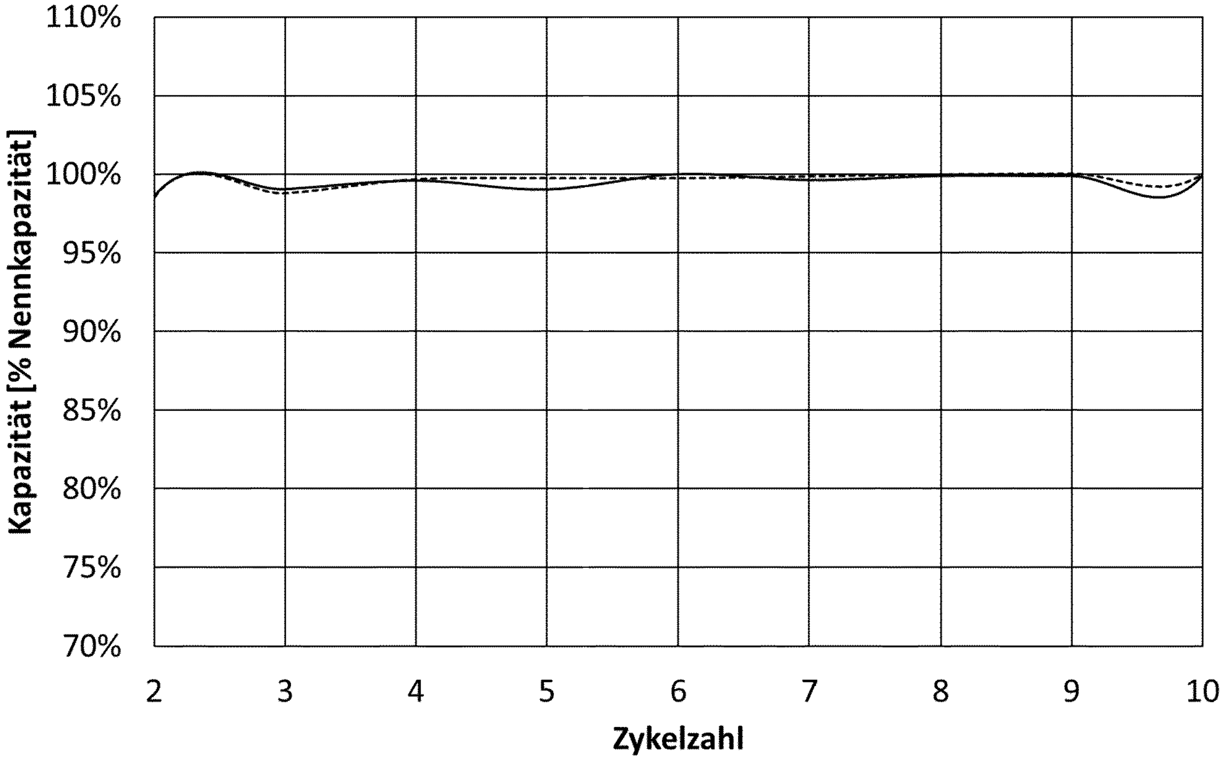
110%
105%
100%
95%
90%
85%
80%
75%
70%
Kapazität [% Nennkapazität]
2
3
4
5
6
7
8
9
10
Zykelzahl

FIG. 18

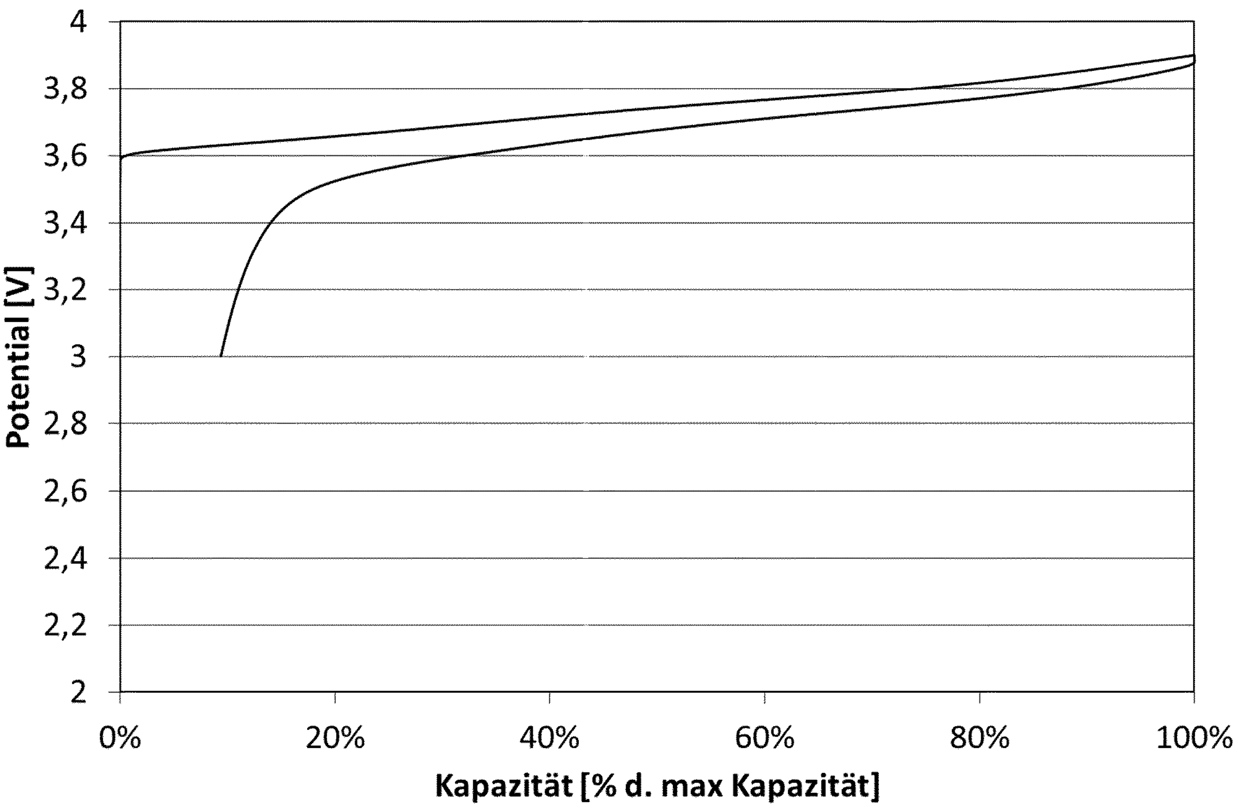
4
3,8
3,6
3,4
3,2
3
2,8
2,6
2,4
2,2
2
Potential [V]
0%
20%
40%
60%
80%
100%
Kapazität [% d. max Kapazität]

FIG. 19

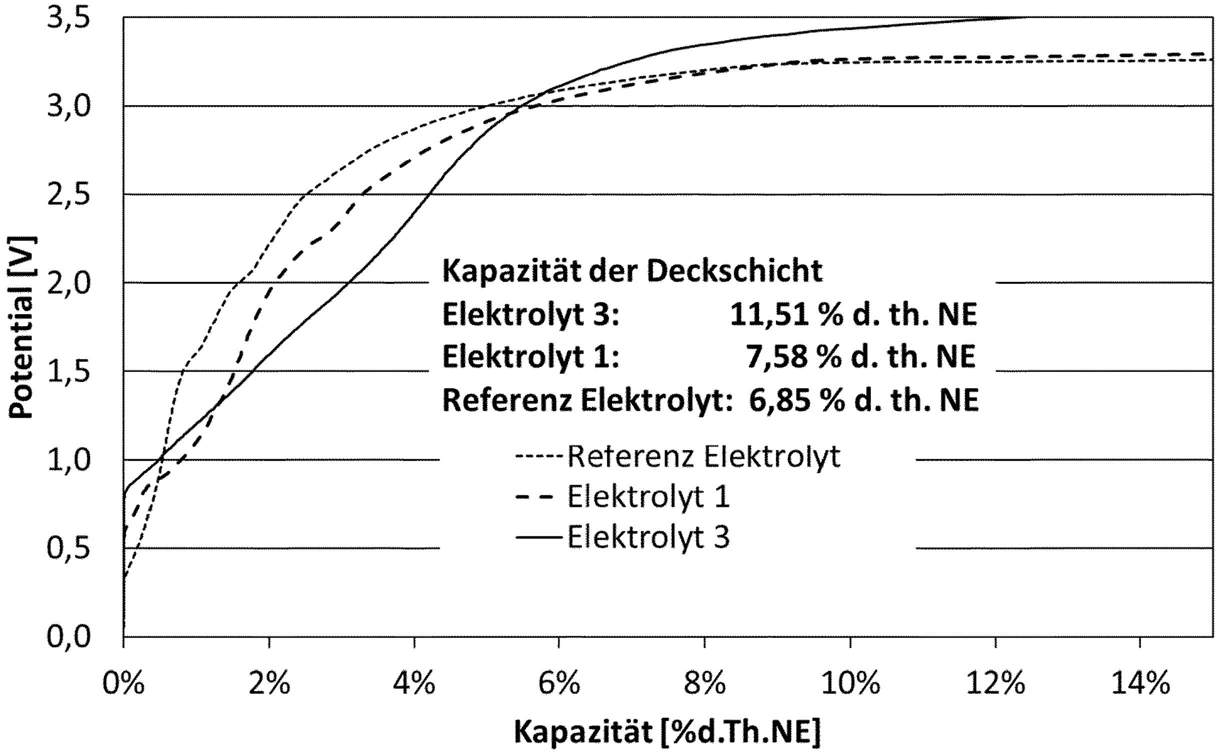
3,5
3,0
2,5
2,0
1,5
1,0
0,5
0,0
Potential [V]
Kapazität der Deckschicht
Elektrolyt 3: 11,51 % d. th. NE
Elektrolyt 1: 7,58 % d. th. NE
Referenz Elektrolyt: 6,85 % d. th. NE
Referenz Elektrolyt
Elektrolyt 1
Elektrolyt 3
0%
2%
4%
6%
8%
10%
12%
14%
Kapazität [%d.Th.NE]

FIG. 20

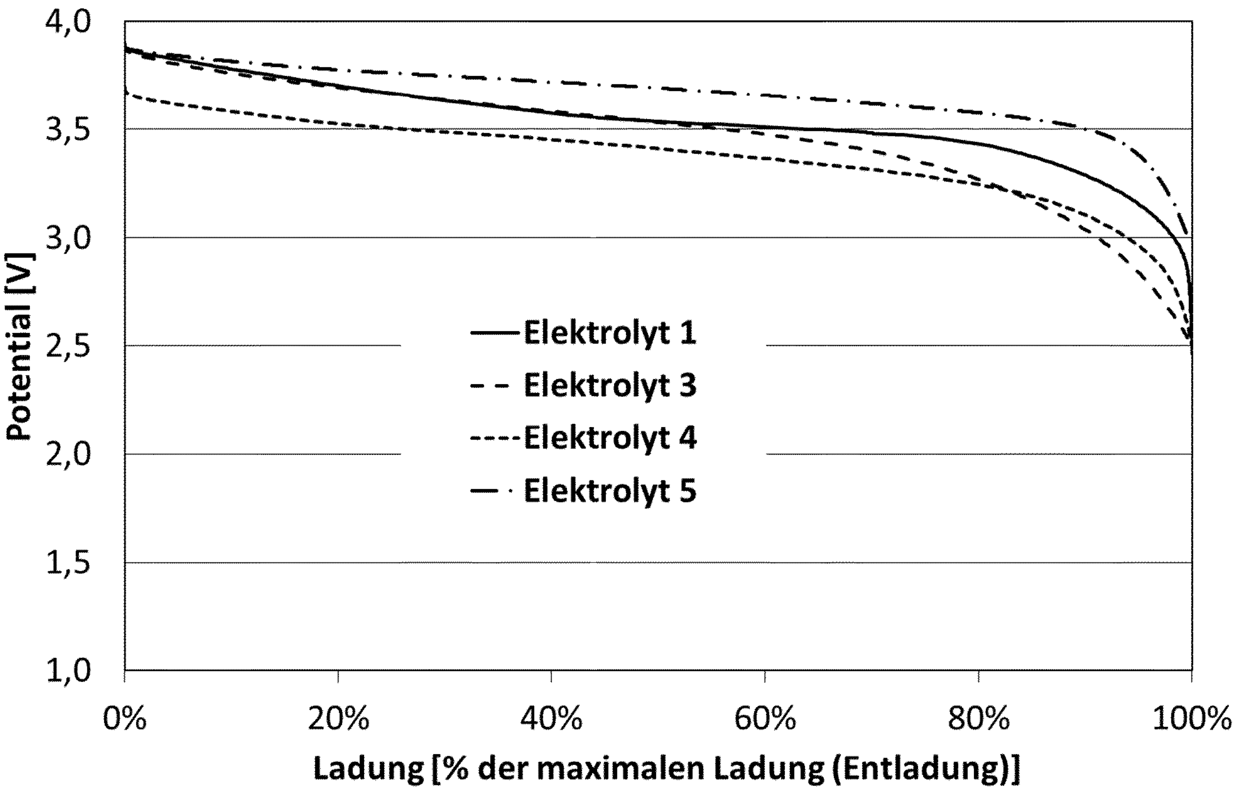
4,0
3,5
3,0
2,5
2,0
1,5
1,0
Potential [V]
Elektrolyt 1
Elektrolyt 3
Elektrolyt 4
Elektrolyt 5
0%
20%
40%
60%
80%
100%
Ladung [% der maximalen Ladung (Entladung)]

FIG. 21

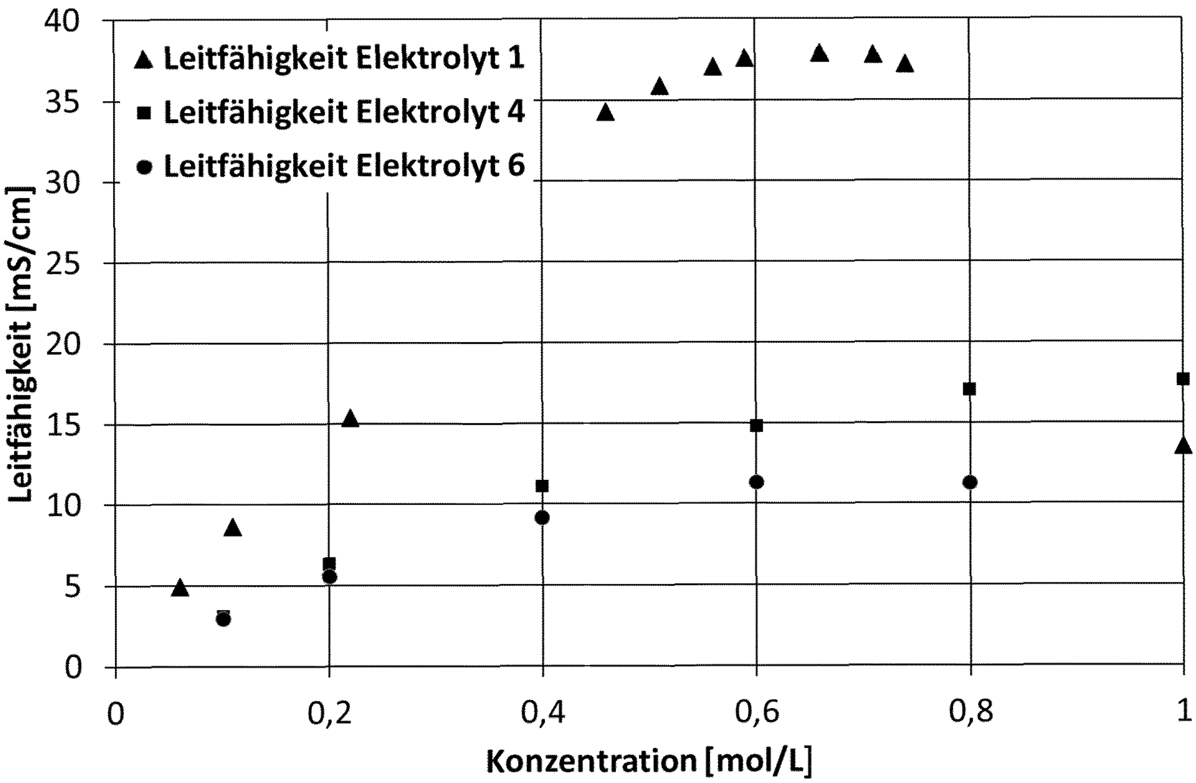
40
35
30
25
20
15
10
5
0
Leitfähigkeit [mS/cm]
▲ Leitfähigkeit Elektrolyt 1
■ Leitfähigkeit Elektrolyt 4
● Leitfähigkeit Elektrolyt 6
0
0,2
0,4
0,6
0,8
1
Konzentration [mol/L]

FIG. 22

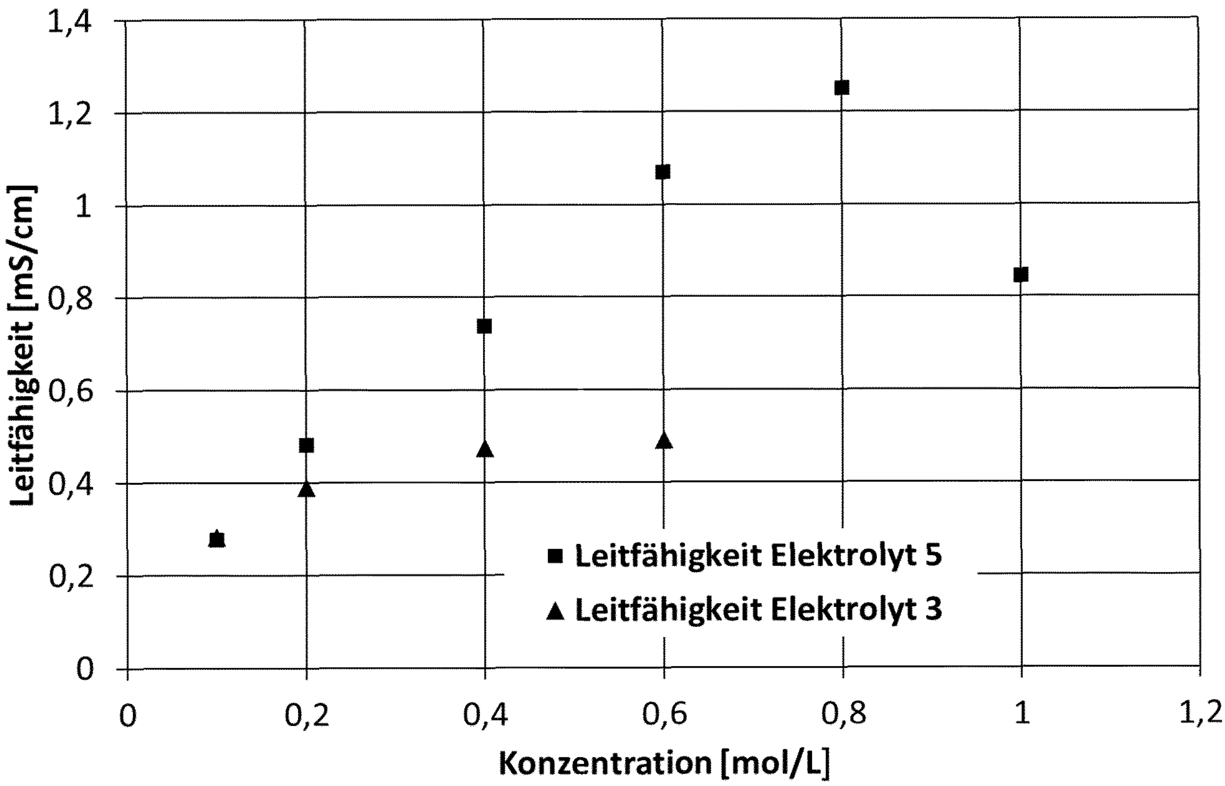
1,4
1,2
1
0,8
0,6
0,4
0,2
0
Leitfähigkeit [mS/cm]
■ Leitfähigkeit Elektrolyt 5
▲ Leitfähigkeit Elektrolyt 3
0
0,2
0,4
0,6
0,8
1
1,2
Konzentration [mol/L]

FIG. 23

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- WO 2020013667 A1
- WO 2021006704 A1
- EP 2534725 B1
- US 20040157129 A1
- EP 2534719 B1
- EP 3734724 A1
- US 4510220 A
- EP 2954588 B1


### In der Beschreibung aufgeführte Nicht-Patentliteratur


- **I. KROSSING**. *Chem. Eur. J.*, 2001, vol. 7, 490
- **S. M. IVANOVA et al.** *Chem. Eur. J.*, 2001, vol. 7, 503
- **TSUJIOKA et al.** *J. Electrochem. Soc.*, 2004, vol. 151, A1418
- **WU XU et al.** *Electrochem. Solid-State Lett.*, 2000, vol. 3, 366-368